(19) Europäisches Patentamt
European Patent Office
Office européen des brevets

(11) **EP 4 437 328 B1**

(12) **FASCICULE DE BREVET EUROPEEN**

(45) Date de publication et mention
de la délivrance du brevet:
**29.10.2025  Bulletin 2025/44**

(21) Numéro de dépôt: **22818755.5**

(22) Date de dépôt: **20.11.2022**

(51) Classification Internationale des Brevets (IPC):
**G01N 21/45** *(2006.01)*      **G01N 21/77** *(2006.01)*

(52) Classification Coopérative des Brevets (CPC):
**G01N 21/45; G01N 21/7703;** G01N 2021/7709;
G01N 2021/7779

(86) Numéro de dépôt international:
**PCT/EP2022/082523**

(87) Numéro de publication internationale:
**WO 2023/094291 (01.06.2023 Gazette 2023/22)**

(54) **SYSTEME INTERFEROMETRIQUE DE DETECTION COMPORTANT DES CAPTEURS OPTIQUES DE MESURE ET DE REFERENCE DE DIFFERENTES SENSIBILITES**

INTERFEROMETRISCHES DETEKTIONSSYSTEM MIT OPTISCHEN MESS- UND REFERENZSENSOREN UNTERSCHIEDLICHER EMPFINDLICHKEIT

INTERFEROMETRIC DETECTION SYSTEM COMPRISING MEASUREMENT AND REFERENCE OPTICAL SENSORS OF DIFFERENT SENSITIVITIES

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **23.11.2021   FR 2112409**

(43) Date de publication de la demande:
**02.10.2024   Bulletin 2024/40**

(73) Titulaires:
• **Aryballe Technologies**
**38000 Grenoble (FR)**
• **Commissariat à l'Energie Atomique et aux Energies Alternatives**
**75015 Paris (FR)**

(72) Inventeurs:
• **LAPLATINE, Loic**
**38054 GRENOBLE Cedex 09 (FR)**
• **LIVACHE, Thierry**
**38000 GRENOBLE (FR)**

(74) Mandataire: **Brevalex**
**22 Avenue Doyen Louis Weil**
**38000 Grenoble (FR)**

(56) Documents cités:
WO-A1-2018/143797      DE-A1- 102017 216 477
FR-A1- 3 064 760      US-A1- 2017 241 764

• DONG YUTING ET AL: "Cascaded multi-baseline interferometry with bistatic TerraSAR-X/TanDEM-X observations for DEM generation", ISPRS JOURNAL OF PHOTOGRAMMETRY AND REMOTE SENSING, AMSTERDAM [U.A.] : ELSEVIER, AMSTERDAM, NL, vol. 171, 7 December 2020 (2020-12-07), pages 224 - 237, XP086428524, ISSN: 0924-2716, [retrieved on 20201207], DOI: 10.1016/ J.ISPRSJPRS.2020.11.012

EP 4 437 328 B1

**Description**

**DOMAINE TECHNIQUE**

Le domaine de l'invention est celui des systèmes interférométriques de détection comportant au moins un capteur optique, adapté à déterminer la valeur d'une grandeur d'intérêt à différents instants de mesure successifs.

**ÉTAT DE LA TECHNIQUE ANTÉRIEURE**

Il existe des systèmes interférométriques de détection adaptés à déterminer, à différents instants de mesure successifs, la valeur d'une grandeur d'intérêt à laquelle ils sont exposés. Dans le cas de la photonique sur silicium, ils peuvent comporter *a minima* une source lumineuse, au moins un capteur optique comportant deux guides d'onde formant un bras sensible et un bras de référence, au moins un photodétecteur et une unité de traitement. Les capteurs optiques peuvent être des interféromètres de type Mach-Zehnder ou à anneau résonant.

La grandeur d'intérêt peut être, entre autres, la quantité d'analytes contenus dans un échantillon fluide venant interagir par adsorption/désorption avec des récepteurs situés sur la surface du bras sensible, voire peut être, entre autres, une température locale ou une pression locale. Cette grandeur d'intérêt induit une modification des propriétés de l'environnement du bras sensible par rapport à celles de l'environnement du bras de référence, ce qui se traduit par une différence de phase entre les signaux optiques se propageant dans les deux bras.

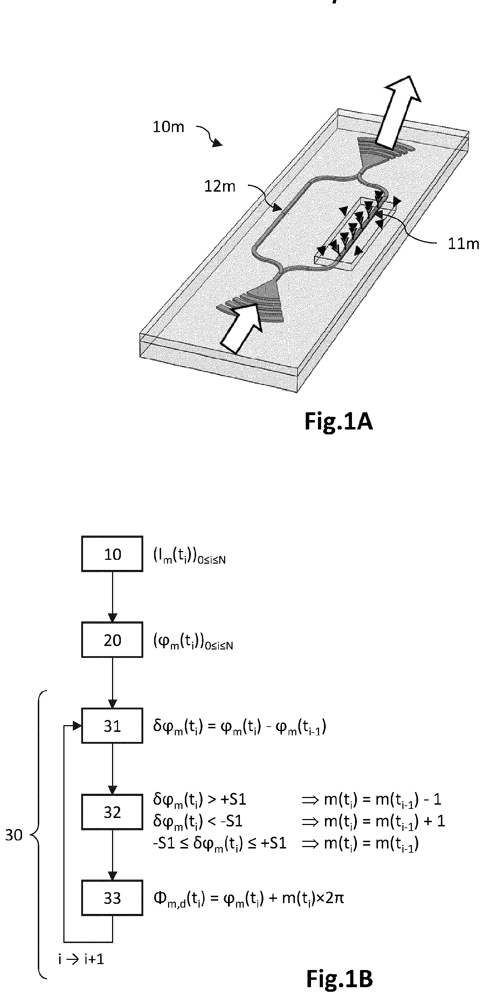

A titre d'exemple, la figure 1A est une vue schématique et partielle d'un interféromètre 10m de Mach-Zehnder (MZI, pour *Mach-Zehnder Interferometer,* en anglais) d'un système interférométrique de détection décrit dans le document EP3754326A1. Ce système interférométrique comporte une source lumineuse, une matrice d'interféromètres de Mach-Zehnder réalisés dans un circuit photonique intégré (PIC, pour *Photonic Integrated Circuit,* en anglais), des photodétecteurs et une unité de traitement. Il est adapté à détecter et caractériser des analytes présents dans un échantillon fluide venant au contact du bras sensible 11m de chaque interféromètre 10m de Mach-Zehnder.

La présence d'analytes adsorbés sur la surface sensible du bras sensible 11m modifie les propriétés du ou des modes optiques guidés le parcourant, et entraîne plus précisément une modification de la phase du mode optique guidé, alors que la phase du mode guidé parcourant le bras de référence 12m n'est sensiblement pas modifiée. La différence de phase effective $\Phi_{eff}(t_i)$ entre les signaux optiques reçus par le coupleur aval, à l'instant de mesure $t_i$, se traduit par une modification de l'intensité $I_m(t_i)$ du signal optique de sortie qui est détecté par le photodétecteur, du fait d'interférences constructives ou destructives entre les signaux optiques circulant dans les deux bras.

La figure 1B illustre un organigramme d'un exemple de procédé de détection de la grandeur d'intérêt à différents instants de mesure successifs. Lors de l'étape 10, on acquiert l'évolution temporelle $I_m(t)$ de l'intensité $I_m$ du signal optique de sortie mesurée par le photodétecteur sur une durée de détection T. Ensuite, lors de l'étape 20, l'unité de traitement détermine (extrait) l'information de phase contenue dans le signal mesuré, et plus précisément ici l'évolution temporelle $\varphi_m(t)$ de la différence de phase dite extraite $\varphi_m$ entre les signaux optiques circulant dans les bras. Ce paramètre $\varphi_m$ se distingue de la différence de phase effective $\Phi_{eff}$ en ce que ses valeurs sont comprises dans un intervalle donné, par exemple $[-\pi ; +\pi]$, alors que la différence de phase effective $\Phi_{eff}$ peut prendre n'importe quelle valeur.

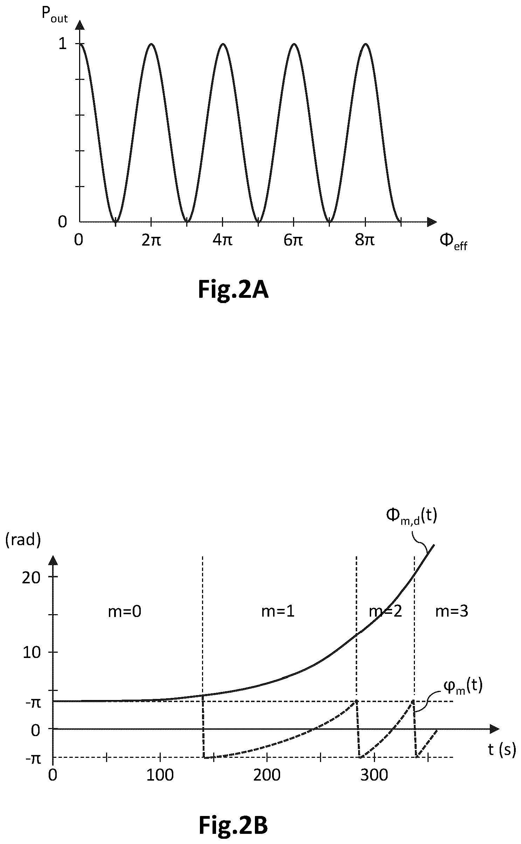

En effet, comme l'illustre la figure 2A, la puissance $P_{out}(t)$ du signal optique de sortie varie de manière périodique et plus précisément de manière sinusoïdale en fonction de la différence de phase effective $\Phi_{eff}(t)$. De plus, comme les méthodes d'extraction de phase utilisent généralement une fonction trigonométrique inverse telle qu'un arc-tangente, la différence de phase extraite $\varphi_m(t)$ présente alors des valeurs modulo $2\pi$.

Aussi, comme l'illustre la figure 2B, la différence de phase extraite $\varphi_m(t)$ varie en présentant des discontinuités de l'ordre de $2\pi$ chaque fois qu'elle atteint l'une des bornes de l'intervalle. Par exemple, dans le cas, comme ici, d'une variation croissante de la différence de phase effective $\Phi_{eff}(t)$, la différence de phase extraite $\varphi_m(t)$ augmente jusqu'à atteindre $+\pi$, puis présente une discontinuité d'une valeur de $-2\pi$ pour redescendre à la valeur de $-\pi$, et reprendre ensuite sa croissance.

Il convient alors de corriger la variation de la différence de phase extraite $\varphi_m(t)$ par l'ajout d'un multiple entier positif ou négatif de $2\pi$, noté $m(t_i) \times 2_\pi$, où $m(t_i)$ est un entier positif ou négatif. Ce dernier est un incrément qui varie d'une unité +1 ou -1 à chaque discontinuité de la différence de phase extraite $\varphi_m(t_i)$. Cette opération de correction de la différence de phase extraite $\varphi_m(t)$ est habituellement appelée dépliement de phase ou déroulement de phase (*phase unwrapping,* en anglais). Elle permet d'obtenir une différence de phase dépliée $\Phi_{m,d}(t)$ dont les valeurs ne sont plus comprises dans l'intervalle en question, et qui est alors effectivement représentative de la différence de phase effective $\Phi_{eff}(t)$

Le procédé de détection comporte donc une phase de dépliement 30, formée d'une étape 31 de calcul d'une variation instantanée $\delta\varphi_m(t_i) = \varphi_m(t_i) - \varphi_m(t_{i-1})$ de la différence de phase extraite $\varphi_m$ entre deux instants de mesure successifs, puis d'une étape 32 de détermination de l'incrément $m(t_i)$. Lors de cette étape, on compare la valeur de cette variation instantanée $\delta\varphi_m(t_i)$ à une valeur seuil S1 prédéfinie, par exemple à $\pi$ environ, pour ajouter ou non une unité positive ou négative à l'incrément $m(t_{i-1})$. Enfin, lors d'une étape 33, on détermine la différence de phase dépliée $\Phi_{m,d}(t_i)$

par ajout à la différence de phase extraite $\varphi_m(t_i)$ du multiple de $2\pi$, soit $m(t_i)\times 2\pi$. La valeur de la grandeur d'intérêt peut ensuite être déterminée à partir de la valeur de la différence de phase dépliée $\Phi_{m,d}(t_i)$ et d'une fonction de calibration prédéfinie.

Cependant, la robustesse de ce procédé de détection suppose que la différence de phase effective $\Phi_{err}(t)$ varie lentement dans le temps, ou que la fréquence de mesure $f = 1/(t_i - t_{i-1})$ soit élevée. Dans le cas contraire, l'indétermination modulo $2\pi$ de la différence de phase extraite $\varphi_m(t_i)$, ainsi qu'une ambiguïté sur le sens de variation de la différence de phase extraite $\varphi_m(t_i)$ peuvent conduire à des valeurs erronées de la différence de phase dépliée $\Phi_{m,d}(t_i)$. C'est le cas notamment lorsque la grandeur d'intérêt présente une évolution temporelle rapide entre deux instants de mesure successifs, voire lorsque la fréquence de mesure $f$ est faible, par exemple à raison d'une mesure par heure ou par jour, auquel cas des discontinuités peuvent ne pas être identifiées.

Le document WO2018/143797A1 propose une méthode de détection utilisant deux interféromètres de sensibilités différentes. Il existe donc un besoin de disposer d'un système interférométrique de détection et de son procédé de détection qui permettent d'améliorer la robustesse de détection.

## EXPOSÉ DE L'INVENTION

L'invention a pour objectif de remédier au moins en partie aux inconvénients de l'art antérieur, et plus particulièrement de proposer un système interférométrique de détection et un procédé qui permettent d'améliorer la robustesse de détection, et plus précisément d'améliorer celle de la détermination de la différence de phase dépliée $\Phi_{m,d}$, en particulier lorsque la variation de la différence de phase effective $\Phi_{m,eff}$ est importante entre deux instants de mesure successifs.

Pour cela, l'objet de l'invention est un système interférométrique de détection d'une grandeur d'intérêt à différents instants de mesure successifs, comportant :

- au moins un capteur optique de mesure, couplé à une source lumineuse et à au moins un photodétecteur de mesure, comportant deux guides d'onde dont l'un forme un bras sensible à la grandeur d'intérêt avec une sensibilité $S_m$ prédéfinie et l'autre un bras de référence non sensible à la grandeur d'intérêt, de sorte que les signaux optiques circulant dans les deux guides d'onde présentent une première différence de phase effective ;
- une unité de traitement, connectée au photodétecteur de mesure, adaptée à : déterminer un premier paramètre dit de phase extraite représentatif de la première différence de phase effective, à partir d'un signal optique détecté par le photodétecteur de mesure, présentant des valeurs comprises à chaque instant de mesure dans un intervalle de largeur prédéfinie ; et à déterminer un premier paramètre dit de phase dépliée par dépliement du premier paramètre de phase extraite en lui ajoutant un multiple entier positif ou négatif de la largeur d'intervalle, pour ensuite déterminer la grandeur d'intérêt.

Selon l'invention, le système interférométrique de détection comporte :

- au moins un capteur optique de référence, couplé à une source lumineuse et à au moins un photodétecteur de référence, comportant deux guides d'onde dont l'un forme un bras sensible à la grandeur d'intérêt avec une sensibilité $S_r$ prédéfinie inférieure à $S_m$ et l'autre un bras de référence non sensible à la grandeur d'intérêt, de sorte que les signaux optiques circulant dans les deux guides d'onde présentent une deuxième différence de phase effective ;
- l'unité de traitement étant connectée au photodétecteur de référence, et adaptée à déterminer un deuxième paramètre dit de phase extraite représentatif de la deuxième différence de phase effective, à partir d'un signal optique détecté par le photodétecteur de référence, présentant des valeurs comprises à chaque instant de mesure dans ledit intervalle ; à déterminer un deuxième paramètre dit de phase dépliée par dépliement du deuxième paramètre de phase extraite en lui ajoutant un multiple entier positif ou négatif de ladite largeur d'intervalle ; et à détecter et corriger une valeur erronée du premier paramètre de phase dépliée à partir du deuxième paramètre de phase dépliée, de manière à obtenir un premier paramètre de phase corrigé à partir duquel la grandeur d'intérêt est déterminée.

Certains aspects préférés mais non limitatifs de ce système interférométrique sont les suivants.

Le capteur optique de référence peut être dimensionné de sorte que sa sensibilité $S_r$ est au moins 2, 5, 10, 100 ou 1000 fois inférieure à la sensibilité $S_m$ du capteur optique de mesure.

Les capteurs optiques de mesure et de référence peuvent être des interféromètres de Mach-Zehnder ou des interféromètres à anneau résonant.

Le bras sensible du capteur optique de référence peut présenter une longueur, une largeur, une hauteur et/ou un indice de réfraction différents de celles du bras sensible du capteur optique de mesure.

Chaque bras sensible des capteurs optiques de mesure et de référence peut être revêtu d'une surface sensible comportant des récepteurs avec lesquels des analytes formant la grandeur d'intérêt sont adaptés à interagir par adsorption/désorption.

Le système interférométrique peut comporter une matrice de capteurs optiques de mesure et une matrice de capteurs optiques de référence, les capteurs optiques de référence présentant différentes sensibilités $S_r$ toutes inférieures aux sensibilités $S_m$ des capteurs optiques de mesure.

Chaque capteur optique de mesure peut être adjacent d'au moins un capteur optique de référence.

Chaque capteur optique de mesure peut être adjacent d'au moins un capteur optique de référence de telle sorte que les surfaces sensibles des capteurs optiques de mesure et de référence adjacents sont au contact l'une de l'autre et forment une même surface sensible.

L'invention porte également sur un procédé de détection d'une grandeur d'intérêt à différents instants de mesure successifs, au moyen d'un système interférométrique de détection selon l'une quelconque des caractéristiques précédentes, comportant les phases suivantes :

- détecter le signal optique du capteur optique de mesure par le photodétecteur de mesure, et le signal optique du capteur optique de référence par le photodétecteur de référence ;
- déterminer les premier et deuxième paramètres de phase extraite ;
- déterminer les premier et deuxième paramètres de phase dépliée ;
- détecter et corriger une valeur erronée du premier paramètre de phase dépliée à partir du deuxième paramètre de phase dépliée, de manière à obtenir un premier paramètre de phase corrigé ;
- déterminer la grandeur d'intérêt à partir du premier paramètre de phase corrigé.

La phase de détection et de correction de la valeur erronée peut comporter les étapes suivantes, effectuées pour chaque instant de mesure : détermination d'une première variation instantanée du premier paramètre de phase dépliée, et d'une deuxième variation instantanée du deuxième paramètre de phase dépliée, entre deux instants de mesure successifs ; détection de la valeur erronée lorsque le signe de la première variation instantanée est différent du signe de la deuxième variation instantanée.

La phase de détection et de correction de la valeur erronée peut comporter en outre les étapes suivantes, effectuées après l'étape de détection : détermination d'une valeur d'un incrément à l'instant de mesure à partir de sa valeur à l'instant de mesure précédent auquel est ajouté une unité dont le signe est celui de la deuxième variation instantanée ; détermination du premier paramètre de phase corrigé corrigeant la valeur erronée à partir du premier paramètre de phase extraite auquel est ajouté le produit de l'incrément déterminé par la largeur d'intervalle.

Le procédé de détection peut comporter une étape de définition d'un rapport des sensibilités comme étant égal à un rapport entre la sensibilité $S_m$ du capteur optique de mesure et la sensibilité $S_r$ du capteur optique de référence, et dans lequel la phase de détection et de correction de la valeur erronée comporte les étapes suivantes effectuées pour chaque instant de mesure : détermination d'une valeur attendue du premier paramètre de phase dépliée à partir du rapport des sensibilités et du deuxième paramètre de phase dépliée ; détection de la valeur erronée lorsque la valeur attendue diffère d'une valeur du premier paramètre de phase dépliée à l'instant de mesure considéré.

La phase de détection et de correction de la valeur erronée peut comporter en outre les étapes suivantes, effectuées après l'étape de détection : détermination d'une valeur d'un incrément à l'instant de mesure à partir de sa valeur à l'instant de mesure précédent auquel est ajouté une partie entière arrondie du rapport d'un écart entre la valeur attendue et d'une valeur du premier paramètre de phase dépliée à l'instant de mesure considéré sur la largeur d'intervalle ; détermination du premier paramètre de phase corrigé corrigeant la valeur erronée à partir du premier paramètre de phase extraite auquel est ajouté le produit de l'incrément déterminé par la largeur d'intervalle.

Le procédé de détection peut comporter une étape de définition d'un rapport des sensibilités comme étant égal à un rapport entre la sensibilité $S_m$ du capteur optique de mesure et la sensibilité $S_r$ du capteur optique de référence, et dans lequel la phase de détection et de correction de la valeur erronée comporte les étapes suivantes, effectuées pour chaque instant de mesure : détermination d'un rapport de phase comme étant égal à un rapport entre le premier paramètre de phase dépliée et le deuxième paramètre de phase dépliée ; détection de la valeur erronée lorsque le rapport de phase diffère du rapport des sensibilités.

La phase de détection et de correction de la valeur erronée peut comporter en outre les étapes suivantes, effectuées après l'étape de détection :

- détermination d'un ensemble de valeurs du premier paramètre de phase dépliée à partir du premier paramètre de phase extraite et de différentes valeurs d'un incrément entier positif ou négatif multiplié à ladite largeur d'intervalle ;
- détermination d'un ensemble de valeurs du rapport de phase à partir de l'ensemble de valeurs du premier paramètre de phase dépliée ;
- détermination d'une valeur optimale parmi les valeurs de l'incrément minimisant un écart entre les valeurs dudit ensemble du rapport de phase vis-à-vis du rapport des sensibilités ;

- détermination du premier paramètre de phase corrigé corrigeant la valeur erronée à partir du premier paramètre de phase extraite auquel est ajouté le produit de la valeur optimale de l'incrément par la largeur d'intervalle.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1A, déjà décrite, est une vue schématique et partielle, en perspective, d'un interféromètre de Mach-Zehnder d'un système interférométrique de détection selon un exemple de l'art antérieur ;

la figure 1B, déjà décrite, illustre un organigramme d'un procédé de détection selon un exemple de l'art antérieur ;

la figure 2A, déjà décrite, illustre une évolution temporelle de la puissance $P_{out}$ du signal optique de sortie mesuré par le photodétecteur du système interférométrique de détection de la fig.1A, en fonction de la différence de phase effective $\Phi_{eff}$ ;

la figure 2B, déjà décrite, illustre une évolution temporelle de la différence de phase extraite $\varphi_m(t)$, et de la différence de phase dépliée $\Phi_{m,d}(t)$ ;

la figure 3A est une vue schématique et partielle d'un système interférométrique de détection selon un mode de réalisation ;

la figure 3B est une vue de dessus, schématique et partielle, de capteurs optiques de mesure et de capteurs optiques de référence d'un système interférométrique de détection selon un mode de réalisation, où ces capteurs sont des interféromètres de Mach-Zehnder ;

la figure 3C est une vue de dessus, schématique et partielle, de capteurs optiques de mesure et de capteurs optiques de référence d'un système interférométrique de détection selon un mode de réalisation, où ces capteurs optiques sont des interféromètres à anneau résonant ;

les figures 4A à 4C sont des vues de dessus, schématiques et partielles, de capteurs optiques de mesure de mesure et de capteurs optiques de référence de type Mach-Zehnder d'un système interférométrique de détection, selon différentes variantes de réalisation ;

la figure 5 illustre un organigramme d'un procédé de détection selon un premier mode de réalisation ;

les figures 6A à 6C illustrent un exemple d'évolutions temporelles de différents paramètres, permettant de comparer le procédé de détection selon l'art antérieur de la fig.1B et le procédé de détection selon le premier mode de réalisation de la fig.5, où :

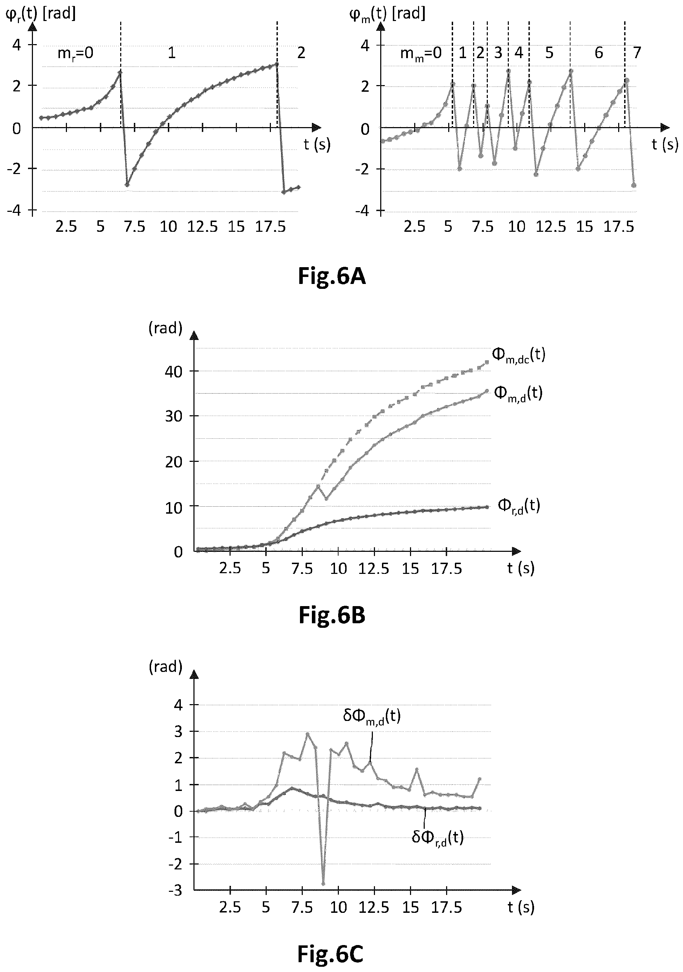

- la fig.6A illustre une évolution temporelle de la différence de phase extraite $\varphi_r(t)$ d'un capteur optique de référence (graphe de gauche), et celle $\varphi_m(t)$ d'un capteur optique de mesure (graphe de droite) ;
- la fig.6B illustre l'évolution temporelle $\Phi_{r,d}(t)$ de la différence de phase dépliée $\Phi_{r,d}$ du capteur optique de référence et celle de la différence de phase dépliée $\Phi_{m,d}(t)$ du capteur optique de mesure obtenues par le procédé de l'art antérieur, ainsi que celle de la différence de phase corrigée $\Phi_{m,dc}(t)$ du capteur optique de mesure obtenue par le procédé selon le premier mode de réalisation ; et
- la fig.6C illustre l'évolution temporelle de la variation instantanée $\delta\Phi_{m,d}(t)$ du capteur optique de mesure et celle de la variation instantanée $\delta\Phi_{r,d}(t)$ du capteur optique de référence ;

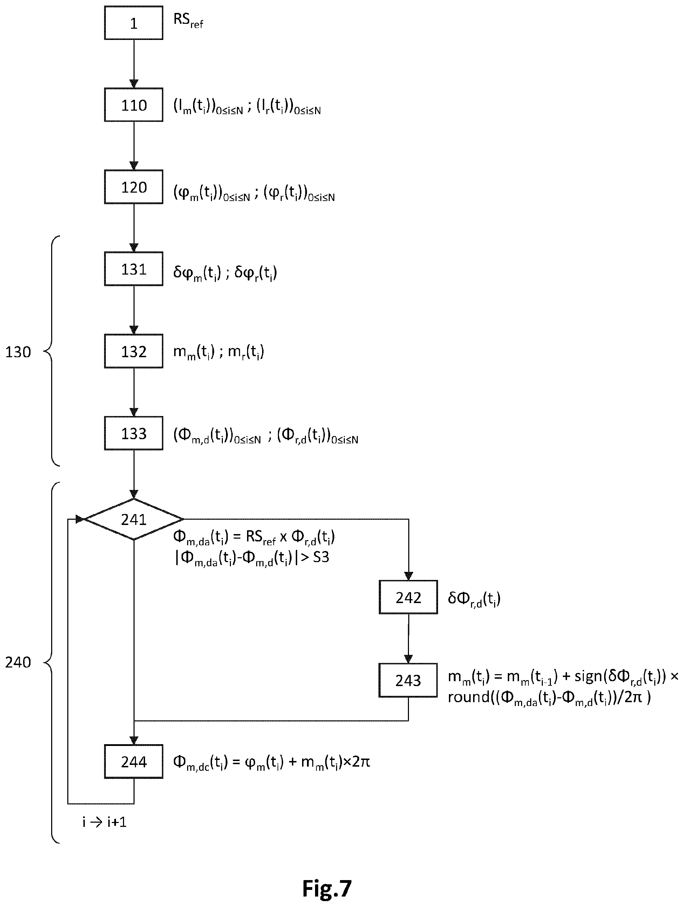

la figure 7 illustre un organigramme d'un procédé de détection selon un deuxième mode de réalisation ;

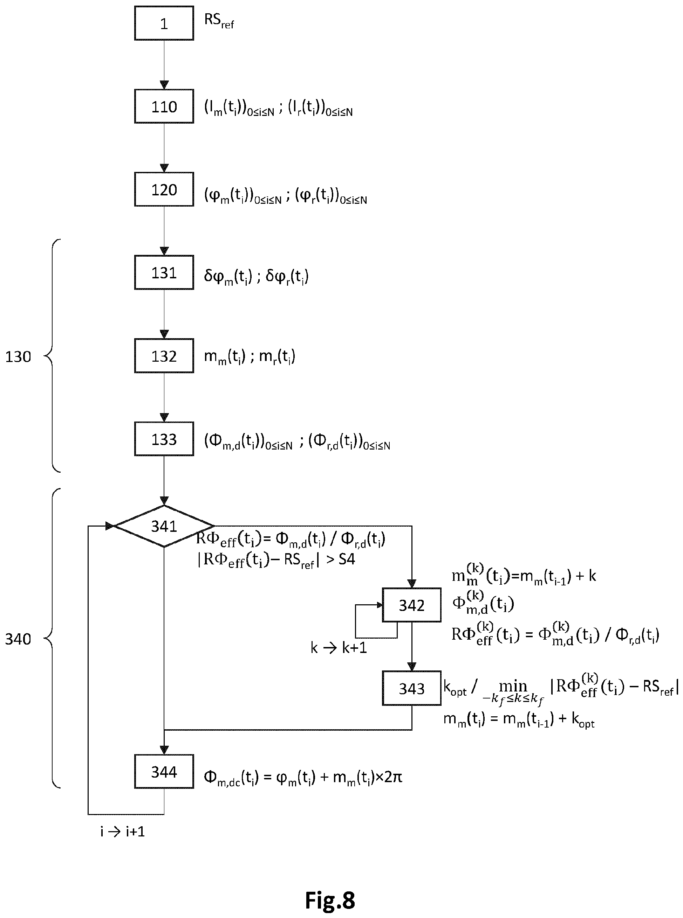

la figure 8 illustre un organigramme d'un procédé de détection selon une variante du deuxième mode de réalisation.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

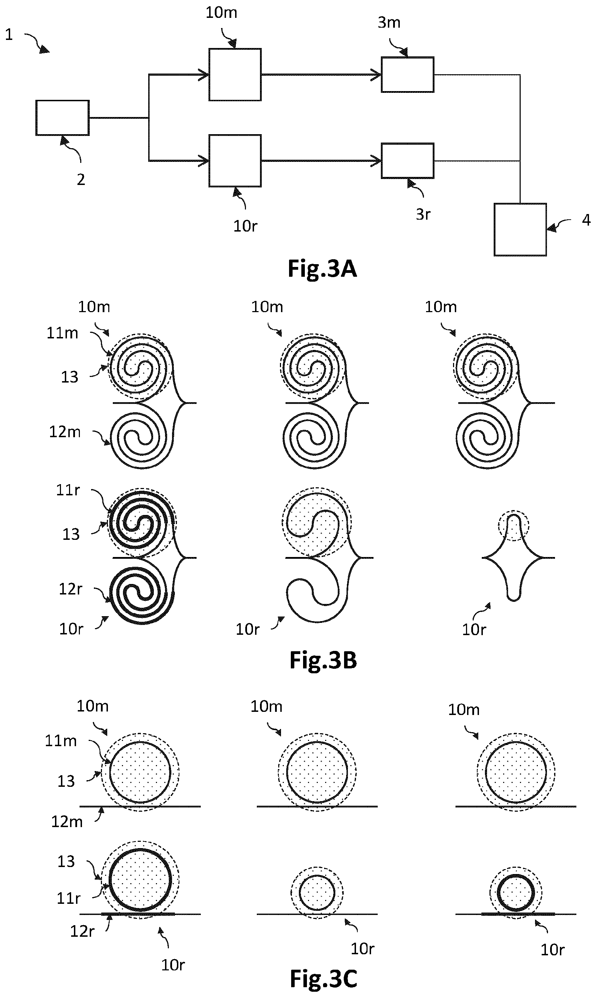

La figure 3A est une vue schématique et partielle d'un système interférométrique de détection 1 selon un mode de réalisation. Le système interférométrique de détection 1 comporte au moins un capteur optique 10m dit de mesure et au moins un capteur optique 10r dit de référence, l'un et l'autre étant couplés à au moins une source lumineuse 2 et à des photodétecteurs 3m, 3r, et une unité de traitement 4. Les capteurs optiques 10 (i.e. 10r, 10m) peuvent ainsi être couplés à une même source lumineuse 2, ou à plusieurs sources lumineuses qui peuvent présenter des puissances nominales identiques ou différentes les unes des autres, et dont les propriétés spectrales et de polarisation sont identiques ou différentes les unes aux autres. Il est adapté à déterminer à différents instants de mesure la valeur d'une grandeur d'intérêt à laquelle il est exposé. Dans ce mode de réalisation, les capteurs optiques 10 (i.e 10m et 10r) sont couplés à la même source lumineuse 2.

La grandeur d'intérêt G peut être la quantité d'analytes contenus dans un échantillon fluide qui interagissent par adsorption/désorption avec des récepteurs situés dans une surface dite sensible 13 du bras sensible 11m, 11r (cf. fig.3B et 3C). Il peut également s'agir d'une température ou d'une pression locale. Dans la suite de la description, la grandeur d'intérêt G est la quantité d'analytes adsorbés aux récepteurs.

Les analytes sont des éléments présents dans un échantillon fluide et destinés à être détectés et caractérisés par le système interférométrique de détection. Ils peuvent être, à titre illustratif, des bactéries, virus, protéines, lipides, molécules organiques volatiles, composés inorganiques, entre autres. Par ailleurs, les récepteurs (*ligands,* en anglais) sont des éléments qui recouvrent l'un des guides d'onde de l'interféromètre de Mach-Zehnder (bras sensible) et présentent une capacité d'interaction avec les analytes, bien que les affinités chimiques et/ou physiques entre les analytes et les récepteurs ne soient pas nécessairement connues. Les récepteurs des différentes surfaces sensibles présentent de préférence des propriétés physico-chimiques différentes, qui impactent leur capacité à interagir avec les analytes. Il peut s'agir, à titre d'exemples, des acides aminés, des peptides, des nucléotides, des polypeptides, des protéines, des polymères organiques, entre autres.

Les capteurs optiques de mesure 10m et de référence 10r sont de préférence réalisés dans une puce photonique contenant un circuit photonique intégré, réalisé par exemple à base de silicium. La source lumineuse 2 et les photodétecteurs 3m, 3r peuvent être situés sur ou dans la puce photonique, ou peuvent être déportés et couplés à celle-ci par des coupleurs optiques (réseaux de diffraction...) comme illustré sur la fig1A. De même, l'unité de traitement 4 peut être située dans ou sur la puce photonique, ou être déportée.

La source lumineuse 2 est de préférence une source optique de lumière cohérente ou non d'un signal continu et monochromatique, de longueur d'onde prédéfinie par exemple située dans le proche infrarouge. Elle peut être une source laser à cavité verticale émettant par la surface (VCSEL pour *Vertical Cavity Surface Emitting Laser* en anglais), une source laser hybride de type III-V/Si, ou tout autre type de source laser. Il peut également s'agir d'une diode électroluminescente.

Les capteurs optiques de mesure 10m et de référence 10r comportent chacun deux guides d'onde, couplés à la source lumineuse, dont l'un forme un bras 11m, 11r sensible à la grandeur d'intérêt avec une sensibilité prédéfinie et l'autre un bras de référence 12m, 12r non sensible à la grandeur d'intérêt, de sorte que les signaux optiques circulant dans les deux guides d'onde présentent une différence de phase effective, notée $\Phi_{m,eff}$ pour les capteurs optiques de mesure 10m, et $\Phi_{r,eff}$ pour les capteurs optiques de référence 10r. De préférence, les capteurs optiques 10m, 10r sont des interféromètres de Mach-Zehnder ou des interféromètres à anneau résonant.

Comme indiqué précédemment, l'intensité du signal optique de sortie détecté par chaque photodétecteur 3m, 3r dépend de la valeur de l'indice effectif du mode optique circulant dans le bras sensible 11m, 11r, lequel est représentatif des interactions entre les analytes et les récepteurs. Rappelons que l'indice effectif d'une mode guidé est défini comme le produit de la constante de propagation $\beta$ et de $\lambda/2\pi$, $\lambda$ étant la longueur d'onde du signal optique. La constante de propagation $\beta$ dépend de la longueur d'onde $\lambda$ et du mode du signal optique, ainsi que des propriétés du guide d'onde (indices de réfraction et géométrie). L'indice effectif du mode optique correspond, d'une certaine manière, à l'indice de réfraction du guide d'onde 'vu' par le mode optique. Il est habituellement compris entre l'indice du cœur et l'indice de la gaine. On comprend donc que la quantité et le type de récepteurs et d'analytes adsorbés dans la surface sensible 13 modifient les propriétés du mode optique et/ou du guide d'onde, et donc la phase du mode guidé.

Il en résulte donc que la présence d'analytes adsorbés sur chaque bras sensible 11m, 11r modifie les propriétés du mode optique guidé le parcourant, et entraîne plus précisément une modification de la phase du mode optique guidé, alors que la phase du mode guidé parcourant le bras de référence 12m, 12r n'est sensiblement pas modifiée. La différence de phase entre les signaux reçus par le coupleur de sortie se traduit par une modification de l'intensité du signal optique recombiné et détecté par le photodétecteur 3m, 3r, du fait d'interférences constructives ou destructives entre les signaux optiques circulant dans les deux bras.

Les capteurs optiques de mesure 10m sont destinés à fournir une information qui sera utilisée par l'unité de traitement 4 pour déterminer la valeur de la grandeur d'intérêt. En revanche, les capteurs optiques de référence 10r sont destinés à fournir une information qui sera utilisée par l'unité de traitement 4, non pas pour déterminer la valeur de la grandeur d'intérêt, mais pour corriger l'information issue des capteurs optiques de mesure 10m, permettant ainsi d'améliorer la robustesse du procédé de détection.

A ce titre, les capteurs optiques de référence 10r diffèrent structurellement des capteurs optiques de mesure 10m de sorte qu'ils présentent une sensibilité $S_r$ inférieure à la sensibilité $S_m$ des capteurs optiques de mesure 10m. Par sensibilité, on entend ici la variation de la différence de phase extraite $\varphi$ induite par une variation de la grandeur d'intérêt G. Ainsi, le système interférométrique de détection, comme détaillé plus loin, bénéficie de la haute sensibilité des capteurs optiques de mesure 10m pour détecter les variations de la grandeur d'intérêt, et met à profit l'information issue des capteurs optiques de référence 10r pour améliorer la robustesse de la détection de la grandeur d'intérêt, en particulier lorsque cette dernière présente une forte variation entre deux instants de mesure.

Les sensibilités $S_m$ et $S_r$ peuvent être définies par un dimensionnement des capteurs optiques de mesure 10m et de référence 10r, pour qu'ils ne soient pas exposés à la grandeur d'intérêt avec la même intensité. Ainsi, le bras sensible 11r de chaque capteur optique de référence 10r présente une longueur, une largeur, une hauteur et/ou un indice de réfraction différents de celles du bras sensibles 11m des capteurs optiques de mesure 10m. Par exemple, le bras sensible 11r des capteurs optiques de référence 10r peuvent avoir une longueur inférieure à celle des bras sensible 11m. La hauteur des bras sensibles 11r peut être ajustée par la réalisation d'une échancrure localisée, d'un réseau sub-longueur d'onde, entre autres. Il est également possible de modifier la polarisation du mode guidé. Le bras sensible 11r peut également comporter un matériau d'indice de réfraction différent de celui du bras sensible 11m.

De préférence, la sensibilité $S_r$ des capteurs optiques de référence 10r est au moins 2 fois, 5 fois, voire 10 fois, voire 100 fois, voire encore 1000 fois inférieure à la sensibilité $S_m$ des capteurs optiques de mesure 10m. Par ailleurs, les capteurs optiques de référence 10r sont de préférence dimensionnés de sorte que la variation instantanée $\delta\varphi_r(t_i)$ de la différence de phase extraite $\varphi_r$ (définie plus loin), à chaque instant de mesure, est inférieure à la moitié de la largeur de l'intervalle dans lequel elle évolue, par exemple inférieure à $\pi$ : $\forall t_i, \delta\varphi_r(t_i) < \pi$, en particulier lorsque la différence d'indice de réfraction entre le guide d'onde du bras sensible 11m et le milieu susceptible de contenir des analytes (par exemple l'air) est au moins égal à 0.5. De préférence encore, les capteurs optiques de référence 10r sont dimensionnés de sorte que la variation instantanée $\delta\Phi_{r,d}(t_i)$ de la différence de phase dépliée $\Phi_{r,d}$ (définie plus loin), à chaque instant de mesure, est inférieure ou égale à la moitié de l'intervalle, par exemple inférieure à $\pi$ : $\forall t_i, \delta\Phi_{r,d}(t_i) \leq \pi$, voire au quart ou au huitième de la largeur de cet intervalle.

Quand les capteurs optiques de mesure 10m n'ont pas une sensibilité $S_m$ identique les uns aux autres, et que les capteurs optiques de référence 10r n'ont pas non plus une sensibilité $S_r$ identique, on peut alors considérer la valeur minimale des sensibilités $S_m$ vis-à-vis de la valeur maximale des sensibilités $S_r$.

La figure 3B est une vue schématique et partielle de capteurs optiques de mesure 10m et de référence 10r selon un mode de réalisation, où les capteurs optiques sont des interféromètres de Mach-Zehnder. D'une manière générale, un interféromètre de Mach-Zehnder 10 (i.e. 10m et 10r) comporte un diviseur d'entrée, deux bras, 11 (i.e. 11m et 11r), 12 (i.e. 12m, 12r) distincts couplés au diviseur d'entrée, et un coupleur de sortie combinant les signaux optiques circulant dans les deux bras. Le signal optique recombiné circule ensuite dans le guide d'onde de sortie jusqu'au photodétecteur correspondant.

Les bras 11, 12 des interféromètres de Mach-Zehnder 10 sont ici des bras qui s'étendent en spirale, mais ils pourraient être rectilignes ou en serpentin. Un guide d'onde est dit en spirale lorsqu'il s'enroule sur lui-même entre le diviseur d'entrée et le coupleur de sortie : il comporte donc une première portion qui se rapproche d'un point fixe suivie d'une deuxième portion qui s'en éloigne. Par ailleurs, un guide d'onde est dit en serpentin lorsqu'il s'étend dans une direction donnée en présentant des ondulations.

Dans cet exemple, les capteurs optiques de mesure 10m sont identiques les uns aux autres, mais ils pourraient être différents les uns des autres. En revanche, les capteurs optiques de référence 10r sont ici différents les uns des autres, par la longueur ou la largeur de leur bras sensible. Ainsi, le capteur optique de référence 10r de gauche présente une largeur des bras supérieure à celle des bras des capteurs optiques de mesure 10m ; et les capteurs optiques de référence 10r central et de droite présentent une longueur des bras inférieure à celle des bras des capteurs optiques de mesure 10m. Quoi qu'il en soit, ils présentent tous une sensibilité $S_r$ inférieure à la sensibilité $S_m$ des capteurs optiques de mesure.

Les capteurs optiques 10 comportent une surface sensible 13 située en regard de chaque bras sensible 11, i.e. une surface de la puce photonique qui est fonctionnalisée par la présence de récepteurs avec lesquels les analytes sont aptes à interagir par adsorption/désorption. Les surfaces sensibles 13 sont spatialement distinctes les unes des autres. Elles comportent des récepteurs qui peuvent être différents d'une surface sensible 13 à l'autre en termes d'affinité chimique ou physique vis-à-vis des analytes, et sont donc destinés à fournir une information d'interaction différente d'une surface sensible 13 à l'autre.

La figure 3C est une vue schématique et partielle de capteurs optiques de mesure 10m et de référence 10r selon un mode de réalisation, où les capteurs optiques 10 sont des interféromètres à anneau résonant. D'une manière générale, un interféromètre à anneau résonant comporte un guide d'onde principal (localement) qui forme le bras de référence 11, et un guide d'onde en anneau couplé au guide d'onde principal de manière évanescente qui forme le bras sensible 11, ici revêtu d'une surface sensible 13. Ainsi, le signal optique de sortie est issu de l'interférence entre le signal optique d'entrée et le signal optique circulant dans l'anneau résonant.

Dans cet exemple, les capteurs optiques de mesure 10m sont identiques les uns aux autres, mais ils pourraient être différents les uns des autres. En revanche, les capteurs optiques de référence 10r sont ici différents les uns des autres, par la longueur ou la largeur de leur bras sensible. Ainsi, le capteur optique de référence 10r de gauche présente une largeur du guide en anneau supérieure à celle des guides d'onde des capteurs optiques de mesure 10m ; et les capteurs optiques de référence 10r central et de droite présentent une longueur du guide en anneau inférieure à celle du guide en anneau des capteurs optiques de mesure 10m. Enfin, dans le capteur optique de référence 10r de droite, le guide d'onde en anneau présente une largeur supérieure et une longueur inférieure à celles du guide d'onde en anneau des capteurs optiques de mesure 10m.

Chaque capteur optique de mesure 10m et de référence 10r est couplé à au moins un photodétecteur 3m, 3r. Celui-ci mesure la valeur de l'intensité ou de la puissance du signal optique de sortie, à chaque instant de mesure, et transmet cette information à l'unité de traitement 4.

L'unité de traitement 4 permet la mise en œuvre des opérations de traitement d'un procédé de détection pour déterminer la valeur de la grandeur d'intérêt à chaque instant de mesure, à partir des signaux optiques détectés par les photodétecteurs. Pour cela, elle est couplée aux photodétecteurs 3m, 3r, et peut comporter au moins un microprocesseur et au moins une mémoire. Elle comporte un processeur programmable apte à exécuter des instructions enregistrées sur un support d'enregistrement d'informations. Elle comporte en outre au moins une mémoire contenant les instructions nécessaires à la mise en œuvre du procédé de caractérisation. La mémoire est également adaptée à stocker les informations calculées à chaque instant de mesure.

L'unité de traitement 4 est adaptée à recevoir, à chaque instant de mesure, une valeur d'un paramètre dit d'intensité représentatif de l'intensité Iou de la puissance P du signal optique de sortie mesurée par chaque photodétecteur. Elle peut ensuite déterminer, en temps réel ou de manière différée (i.e. après la phase de mesure et l'acquisition des valeurs mesurées par les photodétecteurs), *a minima* les paramètres suivants :

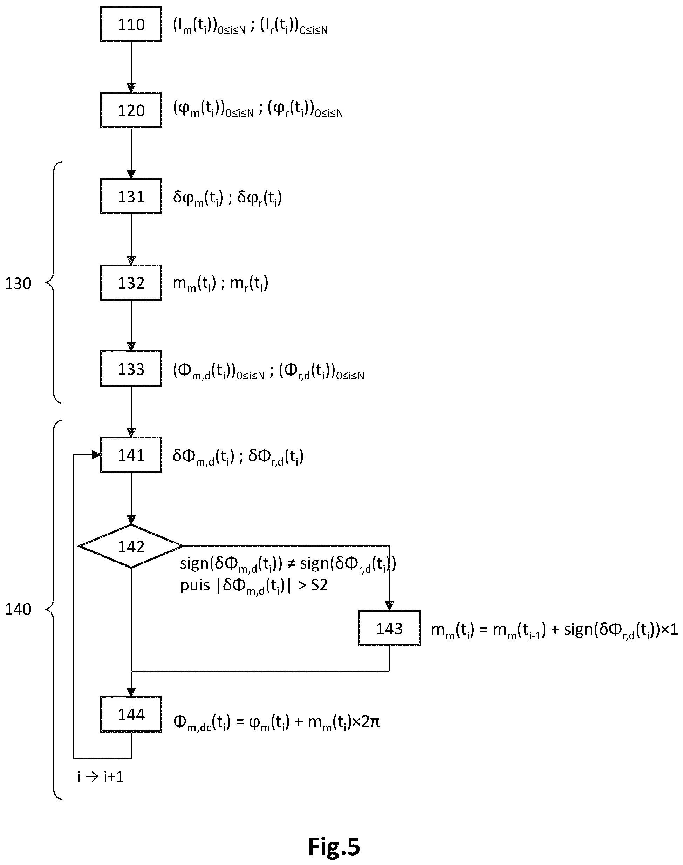

- un paramètre dit de phase extraite, représentatif d'une différence de phase entre les bras sensible et de référence, dont les valeurs restent comprises dans un intervalle dont la largeur est connue. Il peut s'agir de la différence de phase extraite $\varphi_m(t_i)$ et $\varphi_r(t_i)$ dans le cas des interféromètres de Mach-Zehnder dont les valeurs sont situées dans un intervalle $[-\pi ; +\pi]$ ou équivalent, ou il peut s'agir d'une longueur d'onde de résonance extraite dans le cas des interféromètres à anneau résonant dont les valeurs sont situées dans un intervalle $[0 ; +ISL]$ ou équivalent, où ISL est l'intervalle spectral libre.
- un paramètre dit de phase dépliée, représentatif de la différence de phase effective, dont les valeurs ne sont plus comprises dans l'intervalle en question. Ce paramètre est déterminé à partir du paramètre de phase extraite lors d'une phase 130 de dépliement de phase. Il peut s'agir de la différence de phase dépliée $\Phi_{m,d}(t_i)$ et $\Phi_{r,d}(t_i)$ dans le cas des interféromètres de Mach-Zehnder, ou d'une longueur d'onde de résonance estimée dans le cas des interféromètres à anneau résonant. Cependant, ce paramètre peut comporter des valeurs erronées.
- un paramètre dit de phase corrigée, représentatif de la différence de phase effective, dont les valeurs ne sont plus comprises dans l'intervalle en question et dont les valeurs erronées ont été corrigées. Ce paramètre est déterminé à partir du paramètre de phase dépliée lors d'une phase de correction 140 (fig.5), 240 (fig.7), 340 (fig.8). Il peut s'agir de la différence de phase corrigée $\Phi_{m,dc}(t_i)$ et $\Phi_{r,dc}(t_i)$ dans le cas des interféromètres de Mach-Zehnder, ou d'une longueur d'onde de résonance estimée dans le cas des interféromètres à anneau résonant.

Dans la suite de la description, on considère que les capteurs optiques de mesure et de référence sont des interféromètres de Mach-Zehnder. L'unité de traitement est connectée aux photodétecteurs pour recevoir, à chaque instant de mesure, une valeur d'une intensité $I_m(t_i)$ et $I_r(t_i)$ du signal optique de sortie. Le caractère périodique des ondes induit que cette intensité $I_m(t)$, $I_r(t)$ varie également de manière périodique en fonction de la différence de phase effective $\Phi_{m,eff}(t)$, $\Phi_{r,eff}(t)$.

L'unité de traitement est adaptée à déterminer la valeur d'une différence de phase extraite $\varphi(t_i)$ à partir de la valeur d'intensité $I(t_i)$ mesurée, à savoir $\varphi_m(t_i)$ dans le cas des capteurs optiques de mesure, et $\varphi_r(t_i)$ dans le cas des capteurs optiques de référence. Les valeurs de la différence de phase extraite $\varphi(t_i)$ sont modulo $2\pi$, et restent donc comprises dans un intervalle de largeur $2\pi$ tel que par exemple $[-\pi ; +\pi]$.

L'évolution temporelle $\varphi(t)$ de la différence de phase extraite $\varphi(t_i)$ présente donc des discontinuités lorsque sa valeur atteint l'une des bornes de l'intervalle. Il est donc nécessaire de déplier (ou dérouler) cette évolution temporelle, pour obtenir une différence de phase dépliée $\Phi_d(t)$ qui soit représentative de la différence de phase effective $\Phi_{eff}(t)$. L'unité de traitement est donc adaptée à effectuer des opérations de dépliement de la différence de phase, et notamment de calcul de la valeur $m_m(t_i)$ et $m_r(t_i)$ de l'incrément du multiple entier $m(t_i) \times 2\pi$ à ajouter à la différence de phase extraite $\varphi_m(t_i)$ et à $\varphi_r(t_i)$ à chaque discontinuité.

Cependant, la différence de phase dépliée $\Phi_d(t)$ peut présenter des valeurs erronées, liées à un mauvais dépliement. Aussi, l'unité de traitement est adaptée à déterminer une différence de phase corrigée $\Phi_{dc}(t)$ qui soit effectivement représentative de la différence de phase effective $\Phi_{eff}(t_i)$, par correction des valeurs erronées de la différence de phase dépliée $\Phi_d(t)$.

Puis, l'unité de traitement est adaptée à déterminer la valeur de la grandeur d'intérêt $G(t_i)$ à chaque instant de mesure, à partir de la valeur de la différence de phase dépliée $\Phi_{m,dc}(t_i)$ des capteurs optiques de mesure, et d'une fonction de calibration prédéfinie. Il est alors possible de caractériser les analytes. La caractérisation consiste à déterminer une « signature » des analytes, i.e. un motif d'interaction pouvant être représenté par exemple sous forme d'histogramme ou d'un diagramme en radar. Plus précisément, dans le cas où le système interférométrique de détection comporte K surfaces sensibles distinctes, le motif d'interaction est formé par les K informations représentatives scalaires ou vectorielles, celles-ci étant issues du signal optique mesuré associé à la surface sensible considérée.

On peut donc résumer les différentes phases de la manière suivante :

[Math 1]

$$I_m(t); I_r(t) \xrightarrow{\text{extraction}} \varphi_m(t); \varphi_r(t) \xrightarrow{\text{dépliement}} \Phi_{m,d}(t); \Phi_{r,d}(t) \xrightarrow{\text{correction}} \Phi_{m,dc}(t) \to G(t)$$

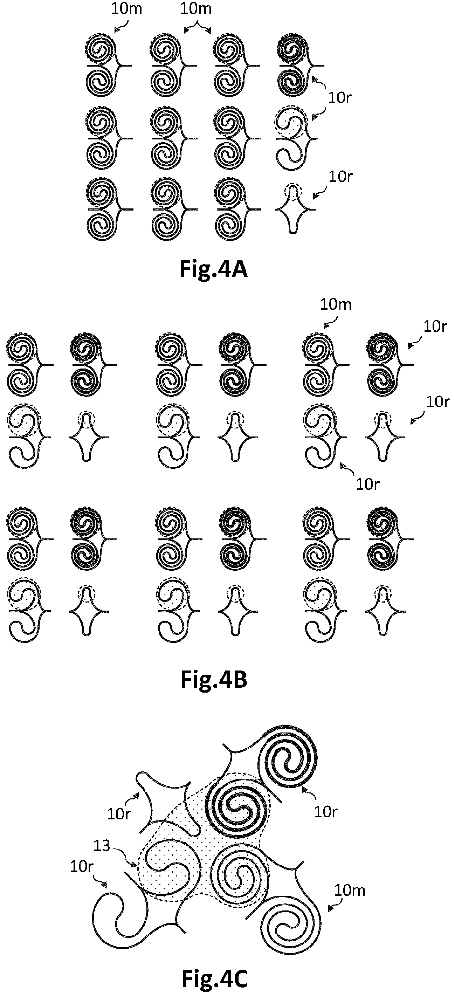

Les figures 4A à 4C sont des vues de dessus, schématiques et partielles, de capteurs optiques de mesure 10m et de capteurs optiques de référence 10r selon des variantes de réalisation. Dans cet exemple, les capteurs optiques 10 sont des interféromètres de Mach Zehnder dont les bras 11, 12 sont agencés en spirale. Par ailleurs, la grandeur d'intérêt est la quantité d'analytes contenus dans un échantillon fluide étant adsorbés aux récepteurs situés dans la surface sensible 13.

En référence à la fig.4A, la matrice de capteurs optiques de mesure 10m est ici configurée de manière périodique en lignes et colonnes, où les capteurs optiques de mesure 10m sont voisins les uns des autres. Les capteurs optiques de référence 10r sont ici situés en bordure de la matrice de capteurs optiques de mesure 10m, et sont ici en nombre inférieur aux capteurs optiques de mesure. Ils présentent une sensibilité $S_r$ différente les uns des autres. Cette architecture a l'avantage d'être particulièrement compacte.

En référence à la fig.4B, chaque capteur optique de mesure 10m est ici situé de manière adjacente à un ou plusieurs capteurs optiques de référence 10r de différentes sensibilités, ici à trois capteurs optiques de référence 10r. Cette architecture a l'avantage d'être particulièrement robuste, en particulier lorsque les capteurs optiques de mesure 10m présentent des sensibilités différentes les uns des autres en fonction du type de fonctionnalisation de surface.

En référence à la fig.4C, chaque capteur optique de mesure 10m présente un bras sensible agencé de manière adjacente aux bras sensibles de plusieurs capteurs optiques de référence 10r, ici de trois capteurs optiques 10r de différentes sensibilités $S_r$. Les surfaces sensibles 13 du capteur optique de mesure 10m et des capteurs optiques de référence 10r sont alors au contact les unes des autres, et ne forment qu'une seule surface sensible de plus grande étendue. Cet agencement permet d'obtenir un système interférométrique de grande robustesse et permet également de simplifier le procédé de réalisation dans la mesure où l'on réduit le nombre de surfaces 13 à fonctionnaliser.

Plusieurs modes de réalisation du procédé de détection sont maintenant décrits, dans le cas ici où la grandeur d'intérêt G est la quantité d'analytes adsorbés dans les surfaces sensibles d'interféromètres de Mach-Zehnder de mesure et de référence. A la différence de l'art antérieur, la différence de phase dépliée $\Phi_{m,d}(t_i)$ de chaque capteur optique de mesure est corrigée si elle contient des valeurs erronées, en tenant compte de la différence de phase dépliée $\Phi_{r,d}(t_i)$ des capteurs optiques de référence, en particulier de sa variation instantanée $\delta\Phi_{r,d}(t_i)$ comme c'est le cas en particulier dans un procédé de détection selon le premier mode de réalisation (fig.5) et/ou d'au moins une valeur instantanée $\Phi_{r,d}(t_i)$ comme c'est le cas en particulier dans le procédé de détection selon le deuxième mode de réalisation (fig.7 et fig.8).

Dans la mesure où les capteurs optiques de référence présentent une faible sensibilité de telle sorte que l'évolution temporelle de la différence de phase extraite $\varphi_r(t_i)$ ne présente que peu ou pas de discontinuités, le fait de tenir compte de ce paramètre pour déterminer la différence de phase dépliée $\Phi_{m,d}(t_i)$ des capteurs optiques de mesure lors de la phase de dépliement permet de corriger les valeurs erronées éventuelles, en particulier celles liées à une erreur du sens de variation de la différence de phase extraite $\varphi_m(t_i)$, ou de valeur de l'incrément $m_m(t_i)$.

Dans un premier mode de réalisation, le procédé de détection corrige la différence de phase dépliée $\Phi_{m,d}(t_i)$ en tenant compte de la variation instantanée $\delta\Phi_{r,d}(t_i)$ de la différence de phase dépliée $\Phi_{r,d}(t_i)$, permettant ainsi de réduire les risques d'avoir des valeurs erronées associées à une erreur sur le sens de variation de la différence de phase extraite $\varphi_m(t_i)$. Par ailleurs, dans un deuxième mode de réalisation, le procédé de détection corrige la différence de phase dépliée $\Phi_{m,d}(t_i)$ en tenant compte de la valeur instantanée de la différence de phase dépliée $\Phi_{r,d}(t_i)$ et d'un rapport des sensibilités $RS_{ref}$ ou des phases $R\Phi_{eff}$, permettant ainsi de réduire les risques d'avoir des valeurs erronées associés à une erreur de valeur de l'incrément $m_m(t_i)$.

La figure 5 est un organigramme d'un procédé de détection selon un premier mode de réalisation, qui permet de réduire le risque d'avoir des valeurs erronées de la différence de phase dépliée $\Phi_{m,d}(t_i)$ liées à une erreur sur le sens de variation de la différence de phase extraite $\varphi_m(t_i)$. Il comporte :

- une phase 110 de mesure de l'intensité $I_m(t_i)$ et $I_r(t_i)$ ;
- une phase 120 de détermination de la différence de phase extraite $\varphi_m(t_i)$ et $\varphi_r(t_i)$ ;
- une phase 130 de détermination (dépliement) de la différence de phase dépliée $\Phi_{m,d}(t_i)$ et $\Phi_{r,d}(t_i)$ ; et enfin
- une phase 140 de correction pour obtenir la différence de phase corrigée $\Phi_{m,dc}(t_i)$. La grandeur d'intérêt $G(t_i)$ peut ensuite être déterminée.

Lors de la phase 110, la source lumineuse émet le signal optique, qui est transmis jusqu'aux différents capteurs optiques de mesure et de référence. Les photodétecteurs mesurent alors l'intensité $I_m(t_i)$ et $I_r(t_i)$ des signaux optiques de sortie, à différents instants de mesure successifs, au cours d'une durée $T = t_N - t_0$. L'évolution temporelle de la grandeur d'intérêt induit celle d'une différence de phase effective $\Phi_{m,eff}(t)$ et $\Phi_{r,eff}(t)$ entre les signaux circulant dans les deux bras de chaque capteur optique. La fréquence d'acquisition peut être quelconque, par exemple d'une acquisition toutes les secondes voire minutes, ou toutes les heures voire jours, ou encore moins.

Lors d'une phase 120, l'unité de traitement détermine l'évolution temporelle de la différence de phase extraite $\varphi_m(t_i)$ pour chaque capteur optique de mesure, et celle de la différence de phase extraite $\varphi_r(t_i)$ pour chaque capteur optique de référence, à partir de l'évolution temporelle de l'intensité mesurée $I_m(t)$ et $I_r(t)$.

Pour cela, selon une approche, chaque capteur optique comporte un coupleur multimode 2x3 (MMI, pour *Multi Mode Interference,* en anglais), les signaux optiques de sortie étant alors déphasés de $2\pi/3$ et détectés par des photodétecteurs. Les puissances de ces trois signaux optiques de sortie sont notées ici $P_1$, $P_2$ et $P_3$, et la composante en phase notée I (comme *In-phase,* en anglais) est calculée telle que : $I = 2 \times P_2 - P_1 - P_3$, ainsi que la composante Q en quadrature de phase par rapport à la composante I : $Q = \sqrt{3} \times (P_1 - P_3)$. La différence de phase extraite $\varphi$ est ensuite calculée telle que $\varphi = \arctan(Q/I)$. Ses valeurs sont donc bien comprises dans un intervalle tel que $[-\pi ; +\pi]$, alors que la différence de phase effective $\Phi_{m,eff}(t)$ et $CD_{r,eff}(t)$ peut prendre n'importe quelle valeur. D'autres approches sont possibles, par exemple en utilisant un coupleur multimode 2x4 où les quatre signaux optiques de sortie sont déphasés de $\pi/2$. On peut également utiliser un coupleur 2x1, où l'intensité peut être corrélée avec la phase de façon non ambiguë sur un intervalle $[0 ; \pi]$, avec 0 correspondant à l'intensité maximale et $\pi$ à l'intensité minimale.

Lors d'une phase 130 de dépliement de la phase, l'unité de traitement détermine la différence de phase dépliée $\Phi_{m,d}(t)$ et $\Phi_{r,d}(t)$. Dans ce premier mode de réalisation, on évite que la phase de dépliement n'induise des erreurs liées au sens de variation de la différence de phase extraite $\varphi_m(t_i)$. Pour cela, on tient compte de la variation instantanée $\delta\Phi_{r,d}(t_i)$ de la différence de phase dépliée $\Phi_{r,d}$ des capteurs optiques de référence.

Lors d'une étape 131, on détermine la variation instantanée $\delta\varphi_m(t_i)$ de la différence de phase extraite $\varphi_m(t_i)$ des capteurs optiques de mesure, telle que : $\delta\varphi_m(t_i) = \varphi_m(t_i) - \varphi_m(t_{i-1})$. Bien entendu, la variation instantanée $\delta\varphi_m(t_i)$ peut être définie autrement, par exemple en moyennant plusieurs valeurs successives pour filtrer les faibles variations liées au bruit. On fait de même pour déterminer la variation instantanée $\delta\varphi_r(t_i)$ de la différence de phase extraite $\varphi_r(t_i)$ des capteurs optiques de référence.

Lors d'une étape 132, on détermine la valeur de l'incrément $m_m(t_i)$ et $m_r(t_i)$ à chaque instant de mesure. Il s'agit alors de savoir si une discontinuité a lieu, pour ajouter ou soustraire une unité le cas échéant. Pour cela, on peut procéder comme dans le procédé de détection de la fig.1B, à savoir en comparant la variation instantanée $\delta\varphi_m(t_i)$ à une valeur seuil prédéfinie S, ici égale à $\pi$ environ. Si la variation instantanée $\delta\varphi_m(t_i)$ est supérieure à $+\pi$, l'incrément $m_m(t_i)$ diminue d'une unité : $m_m(t_i) = m_m(t_{i-1}) - 1$ ; si elle est inférieure à $-\pi$, l'incrément $m_m(t_i)$ augmente d'une unité : $m_m(t_i) = m_m(t_{i-1}) + 1$ ; et si elle est comprise entre $-\pi$ et $+\pi$, alors il n'y a pas de discontinuité et l'incrément $m_m(t_i)$ ne change pas de valeur. On procède de même pour obtenir l'incrément $m_r(t_i)$.

Lors d'une étape 133, on détermine la valeur de la différence de phase dépliée $\Phi_{m,d}(t_i)$ et $\Phi_{r,d}(t_i)$ à chaque instant de mesure, en ajoutant $m_m(t_i) \times 2\pi$ à $\varphi_m(t_i)$ : $\Phi_{m,d}(t_i) = \varphi_m(t_i) + m_m(t_i) \times 2\pi$. On procède de même pour obtenir la différence de phase dépliée $\Phi_{r,d}(t_i)$ : $\Phi_{r,d}(t_i) = \varphi_r(t_i) + m_r(t_i) \times 2\pi$.

Cependant, il apparaît qu'une discontinuité peut ne pas être détectée, en particulier lorsque la variation instantanée $\delta\varphi_m(t_i)$ est inférieure à la valeur seuil S1 en valeur absolue. Le procédé de détection de l'art antérieur (fig.1B) ne va alors pas ajouter une unité à l'incrément $m(t_i)$ considéré, qui gardera alors sa valeur à l'instant précédent $t_{i-1}$. La discontinuité ne sera alors pas corrigée.

Aussi, le procédé de détection comporte une phase 140 de correction, qui comporte une identification de ces valeurs erronées liées à une absence de correction de ces discontinuités, en comparant le signe de la variation instantanée $\delta\Phi_{m,d}(t_i)$ avec celui de $\delta\Phi_{r,d}(t_i)$. Les étapes de cette phase 140 sont effectuées pour les instants de mesure $t_1$ à $t_N$.

Lors d'une étape 141, l'unité de traitement détermine la variation instantanée $\delta\Phi_{m,d}(t_i)$ de la différence de phase dépliée $\Phi_{m,d}(t_i)$ des capteurs optiques de mesure, telle que : $\delta\Phi_{m,d}(t_i) = \Phi_{m,d}(t_i) - \Phi_{m,d}(t_{i-1})$. Bien entendu, la variation instantanée $\delta\Phi_{m,d}(t_i)$ peut être définie autrement, par exemple en moyennant plusieurs valeurs successives pour filtrer les faibles variations liées au bruit. On fait de même pour déterminer la variation instantanée $\delta\Phi_{r,d}(t_i)$ de la différence de phase dépliée $\Phi_{r,d}(t_i)$ des capteurs optiques de référence.

Lors d'une étape 142, l'unité de traitement compare le signe de la variation instantanée $\delta\Phi_{m,d}(t_i)$ à celui de la

variation instantanée $\delta\Phi_{r,d}(t_i)$. Dans le cas où les signes ne sont pas identiques, puis dans le cas où la valeur de la variation instantanée $\delta\Phi_{m,d}(t_i)$ de la phase dépliée est supérieure en valeur absolue à une valeur seuil S2 prédéfinie, par exemple ici à $\pi/4$ (un huitième de la largeur de l'intervalle), alors on considère que la valeur de la différence de phase dépliée $\Phi_{m,d}(t_i)$ est erronée et doit être corrigée. Dans le cas contraire, le procédé poursuit directement à l'étape 144. Notons ici que la deuxième condition avec le seuil S2 permet de filtrer les variations non utiles liées au bruit.

Lors d'une étape 143, l'incrément $m_m(t_i)$ déterminé à l'étape 132 est corrigé, dans la mesure où on considère qu'il n'a pas été modifié de manière correcte. Il est corrigé en ajoutant à sa valeur à l'instant précédent $m_m(t_{i-1})$ une unité ayant le signe de la variation instantanée $\delta\Phi_{r,d}(t_i)$, c'est-à-dire par la relation : $m_m(t_i) = m_m(t_{i-1}) + \text{sign}(\delta\Phi_{r,d}(t_i)) \times 1$.

Lors de l'étape 144, l'unité de traitement détermine la différence de phase corrigée $\Phi_{m,dc}(t_i)$ en ajoutant le multiple entier de $2\pi$, soit $m_m(t_i) \times 2\pi$, à la différence de phase extraite $\varphi_m(t_i)$ : $\Phi_{m,dc}(t_i) = \varphi_m(t_i) + m_m(t_i) \times 2\pi$. L'incrément $m_m(t_i)$ est soit celui déterminé lors de l'étape 132 lorsqu'il n'y a pas de valeurs erronées, soit celui déterminé lors de l'étape 143 lorsqu'une valeur erronée a été détectée.

Ainsi, au terme de la phase 140 de correction, on obtient l'évolution temporelle $\Phi_{m,dc}(t)$ de la différence de phase corrigée $\Phi_{m,dc}$, qui est bien représentative de la différence de phase effective, dans la mesure où les valeurs erronées ont été corrigées. Notons que l'on peut évidemment lui soustraire sa valeur à l'instant initial $t_0$ de sorte que sa première valeur soit égale à zéro. Enfin, lors d'une phase suivante, le procédé de détection détermine l'évolution temporelle G(t) de la grandeur d'intérêt G à partir de celle de la différence de phase corrigée $\Phi_{m,dc}$.

Aussi, le procédé de détection selon le premier mode de réalisation permet de déterminer la différence de phase dépliée $\Phi_{m,d}(t)$ qui a été corrigée de ses valeurs erronées, en tirant parti des informations issues des capteurs optiques de référence de moindre sensibilité. La robustesse de détection est donc améliorée.

Les figures 6A à 6C illustrent un exemple concret comparant le procédé de détection selon le premier mode de réalisation (fig.5) avec le procédé de détection selon l'exemple de l'art antérieur de la fig.1A.

La fig.6A illustre un exemple d'évolution temporelle de la différence de phase extraite $\varphi_r(t)$ d'un capteur optique de référence (graphe de gauche), et un exemple d'évolution temporelle de la différence de phase extraite $\varphi_m(t)$ d'un capteur optique de mesure (graphe de droite). Selon l'invention, le capteur optique de référence présente une sensibilité $S_r$ inférieure à celle $S_m$ du capteur optique de mesure.

La différence de phase extraite $\varphi_r(t)$ présente, au cours de la durée d'acquisition T = 20s, deux discontinuités, de sorte que l'incrément $m_r(t)$ passe de la valeur initiale égale à zéro, à la valeur +1 à t=6s environ, jusqu'à la valeur +2 à t=18s. En revanche, sur la même durée d'acquisition T, la différence de phase extraite $\varphi_r(t)$ présente sept discontinuités, de sorte que la valeur finale de l'incrément $m_m(t)$ est égale à sept. Ceci est dûe à la différence de sensibilité entre les deux capteurs optiques vis-à-vis d'une même variation de la grandeur d'intérêt.

La fig.6B illustre l'évolution temporelle de la différence de phase dépliée $\Phi_{r,d}(t)$ obtenue par un procédé de détection, qu'il s'agisse de celui de la fig.1B (art antérieur) ou celui de la fig.5 (premier mode de réalisation). La différence de phase dépliée $\Phi_{r,d}(t)$ évolue continûment, sans valeurs erronées, à partir de 0 rad jusqu'à 10 rad environ. La figure illustre également l'évolution temporelle de la différence de phase dépliée $\Phi_{r,d}(t)$ obtenue à l'issue de l'étape 133 du procédé de détection de la fig.5. On remarque cependant qu'il présente une valeur erronée à t=9s environ. Enfin, la figure illustre l'évolution temporelle de la différence de phase corrigée $\Phi_{r,dc}(t)$ obtenue à l'issue de l'étape 144 du procédé de détection de la fig.5. On remarque que la valeur erronée a été corrigée.

La fig.6C illustre l'évolution temporelle des variations instantanées $\delta\Phi_{r,d}(t)$ et $\delta\Phi_{m,d}(t)$ obtenue à l'issue de l'étape 141 du procédé de détection de la fig.5. On remarque que la variation instantanée $\delta\Phi_{r,d}(t)$ garde un signe positif à chaque instant de mesure, alors que la variation instantanée $\delta\Phi_{m,d}(t)$ présente un signe négatif à t=9s environ. La première condition de l'étape 142 est passée, à savoir une différence de signe entre les variations instantanées $\delta\Phi_{r,d}(t)$ et $\delta\Phi_{m,d}(t)$. De plus, la deuxième condition est également passée, à savoir une valeur de la variation instantanée $\delta\Phi_{m,d}(t)$ supérieure en valeur absolue à la valeur seuil prédéfinie S2 (ici égale à $\pi/4$).

Il en résulte que le procédé de détection selon ce premier mode de réalisation est effectivement en mesure d'identifier et de corriger les valeurs erronées présentes dans l'évolution temporelle de la différence de phase dépliée $\Phi_{m,d}(t)$.

La figure 7 illustre un organigramme d'un procédé de détection selon un deuxième mode de réalisation. Ici, le procédé est en mesure de déterminer la valeur de l'incrément $m_m(t_i)$ à appliquer, en particulier lorsqu'une discontinuité de la différence de phase extraite $\varphi_r(t_i)$ correspond en fait à plusieurs variations de $2\pi$. Cette situation peut se présenter en particulier lorsque la fréquence d'acquisition est très faible et ne fournit pas une résolution suffisante pour appréhender de manière fine l'évolution temporelle de la différence de phase effective $\Phi_{m,eff}(t)$.

Comme dans le procédé de détection de la fig.5, le procédé selon ce mode de réalisation comporte une phase 110 de mesure de l'intensité $I_m(t_i)$ et $I_r(t_i)$ ; une phase 120 de détermination de la différence de phase extraite $\varphi_m(t_i)$ et $\varphi_r(t_i)$ ; une phase 130 de détermination (dépliement) de la différence de phase dépliée $\Phi_{m,d}(t_i)$ et $\Phi_{r,d}(t_i)$ ; et enfin une phase 240 de correction pour obtenir la différence de phase corrigée $\Phi_{m,dc}(t_i)$. à partir de laquelle la grandeur d'intérêt G($t_i$) peut ensuite être déterminée. Les phases 110, 120 et 130 peuvent être identiques ou équivalentes à celles décrites précédemment, et ne sont donc pas détaillées à nouveau.

Le procédé de détection selon ce deuxième mode de réalisation repose sur l'utilisation d'un rapport $RS_{ref}$ prédéfini des sensibilités $S_m/S_r$ pour estimer une valeur attendue $\Phi_{m,de}(t_i)$ de la différence de phase dépliée à partir de la valeur de la différence de phase dépliée $\Phi_{r,d}(t_i)$, puis identifier et corriger une valeur erronée de la différence de phase dépliée $\Phi_{m,d}(t_i)$. En effet, le rapport des sensibilités $RS_{ref}$ est une constante qui traduit le fait que le rapport $\Phi_{m,d}(t_i)/\Phi_{r,d}(t_i)$ des différences de phase dépliée $\Phi_{m,d}(t_i)$ et $\Phi_{r,d}(t_i)$ devrait également être une constante dans le temps.

Lors d'une étape initiale 1, on définit un rapport $RS_{ref}$ comme étant égal au rapport des sensibilités $S_m/S_r$. Comme indiqué précédemment, le rapport $RS_{ref}$ peut être déterminé à partir des longueurs $L_m$, $L_r$, des largeurs $l_m$, $l_r$, et/ou des hauteurs des bras sensibles des capteurs optiques de mesure 10m et des capteurs optiques de référence 10r, voire par les indices de réfraction différents entre le matériau du bras sensible 11r et celui du bras sensible 11m. Les sensibilités peuvent avoir été mesurées préalablement lors d'une phase de calibration.

A la suite des phases 110, 120, 130, l'unité de traitement met en œuvre la phase 240 de correction. Les opérations de cette phase de correction 240 sont effectuées pour balayer les instants de mesure de $t_1$ à $t_N$. Elles sont effectuées ici après avoir obtenu l'évolution temporelle $\Phi_{m,d}(t)$ et $\Phi_{r,d}(t)$ des différences de phase dépliée $\Phi_{m,d}$ et $\Phi_{r,d}$, mais peuvent en variante être effectuées en temps réel (les phases 110, 120, 130, 240 étant alors effectuées à la suite à chaque instant de mesure).

Lors d'une étape 241, l'unité de traitement détermine une valeur $\Phi_{m,da}(t_i)$ de la différence de phase dépliée $\Phi_{m,d}$, à partir de la valeur de la différence de phase dépliée $\Phi_{r,d}(t_i)$ et du rapport des sensibilités $RS_{ref}$, par la relation suivante : $\Phi_{m,da}(t_i) = RS_{ref} \times \Phi_{r,d}(t_i)$. Il s'agit de considérer la valeur $\Phi_{r,d}(t_i)$ issue des capteurs optiques de référence comme une valeur sûre, et de projeter, grâce au rapport des sensibilités $RS_{ref}$, quelle devrait être la valeur correspondante de la différence de phase dépliée $\Phi_{m,d}(t_i)$. Cette valeur projetée, ou attendue, est donc notée $\Phi_{m,da}(t_i)$.

Puis, l'unité de traitement compare la valeur attendue $\Phi_{m,da}(t_i)$ à la valeur déterminée $\Phi_{m,d}(t_i)$ obtenue à l'étape 133. Si l'écart entre la valeur attendue $\Phi_{m,da}(t_i)$ et la valeur déterminée $\Phi_{m,d}(t_i)$ est supérieure en valeur absolue à une valeur seuil prédéfinie S3 (par exemple $S3 = \pi$) alors le procédé continue avec les étapes 242 et 243. Dans le cas contraire, le procédé continue avec l'étape 244.

Lors d'une étape 242, l'unité de traitement détermine la variation instantanée $\delta\Phi_{r,d}(t_i)$ de la différence de phase dépliée $\Phi_{r,d}(t_i)$ telle que, par exemple : $\delta\Phi_{r,d}(t_i) = \Phi_{r,d}(t_i) - \Phi_{r,d}(t_{i-1})$.

Lors d'une étape 243, l'unité de traitement détermine l'incrément $m_m(t_i)$ à utiliser pour corriger la valeur erronée de la différence de phase dépliée $\Phi_{m,d}(t_i)$ en ajoutant à sa valeur de l'instant précédent $m_m(t_{i-1})$ un entier, potentiellement plus grand que 1, calculé à partir de l'écart entre la valeur attendue $\Phi_{m,da}(t_i)$ et la valeur déterminée $\Phi_{m,d}(t_i)$, telle que : $m_m(t_i) = m_m(t_{i-1}) + sign(\delta\Phi_{r,d}(t_i)) \times (round(\Phi_{m,da}(t_i) - \Phi_{m,d}(t_i))/2\pi$, où le terme 'round' est une fonction qui fournit la valeur entière arrondie de la fraction. Ainsi, s'il s'avère qu'entre deux instants de mesure, plusieurs discontinuités ont eu lieu du fait d'une forte variation de la grandeur d'intérêt, mais qu'une seule discontinuité n'a pu être mesurée (il se pourrait également qu'aucune discontinuité ne soit détectée, par exemple dans le cas d'une variation de $px2\pi$ entre deux instants de mesure, avec p une valeur entière), cette étape permet de déterminer la bonne valeur de l'incrément $m_m(t_i)$, puisqu'elle utilise l'information issue du capteur optique de référence (ici la différence de phase dépliée $\Phi_{r,d}(t_i)$) ainsi que le rapport des sensibilités $RS_{ref}$.

Lors de l'étape 244, l'unité de traitement détermine la différence de phase corrigée $\Phi_{m,dc}(t_i)$ en ajoutant le multiple entier de $2\pi$, soit $m_m(t_i) \times 2\pi$ à la différence de phase extraite $\varphi_m(t_i)$, telle que : $\Phi_{m,dc}(t_i) = \varphi_m(t_i) + m_m(t_i) \times 2\pi$. L'incrément $m_m(t_i)$ est soit celui déterminé lors de l'étape 132 lorsqu'il n'y a pas de valeurs erronées, soit celui déterminé lors de l'étape 243 lorsqu'une valeur erronée a été détectée.

Ainsi, au terme de la phase 240 de correction, on obtient l'évolution temporelle $\Phi_{m,dc}(t)$ de la différence de phase corrigée $\Phi_{m,dc}$, qui est bien représentative de la différence de phase effective, dans la mesure où les valeurs erronées ont été corrigées. Notons que l'on peut évidemment lui soustraire sa valeur à l'instant initial $t_0$ de sorte que sa première valeur soit égale à zéro. Enfin, lors d'une phase suivante, le procédé de détection détermine l'évolution temporelle G(t) de la grandeur d'intérêt G à partir de celle de la différence de phase corrigée $\Phi_{m,dc}$.

Aussi, le procédé de détection selon le deuxième mode de réalisation permet de déterminer la différence de phase dépliée $\Phi_{m,d}(t)$ qui a été corrigée de ses valeurs erronées, en tirant parti des informations issues des capteurs optiques de référence de moindre sensibilité. Ce mode de réalisation est particulièrement efficace lorsqu'il y a eu plusieurs discontinuités de la différence de phase extraite $\varphi_m(t_i)$ entre deux instants de mesure, alors que la phase 120 d'extraction n'est pas en mesure de lever l'ambiguïté sur la valeur modulo $2\pi$. Cette ambiguïté est donc levée lors de la phase de correction 240. La robustesse de détection est donc améliorée.

La figure 8 illustre un organigramme d'un procédé de détection selon un autre exemple du deuxième mode de réalisation. Ici également, le procédé est en mesure de déterminer la valeur de l'incrément $m_m(t_i)$ à appliquer, en particulier lorsqu'une discontinuité de la différence de phase extraite $\varphi_r(t_i)$ correspond en fait à plusieurs variations de $2\pi$.

Comme dans le procédé de détection de la fig.7, le procédé selon cet exemple comporte une phase 110 de mesure de l'intensité $I_m(t_i)$ et $I_r(t_i)$ ; une phase 120 de détermination de la différence de phase extraite $\varphi_m(t_i)$ et $\varphi_r(t_i)$ ; une phase 130 de détermination (dépliement) de la différence de phase dépliée $\Phi_{m,d}(t_i)$ et $\Phi_{r,d}(t_i)$ ; et enfin une phase 340 de correction pour obtenir la différence de phase corrigée $\Phi_{m,dc}(t_i)$, à partir de laquelle la grandeur d'intérêt $G(t_i)$ peut ensuite

être déterminée. Les phases 1, 110, 120 et 130 peuvent être identiques ou équivalentes à celles décrites précédemment, et ne sont donc pas détaillées à nouveau.

Les opérations de cette phase de correction 340 sont effectuées pour balayer les instants de mesure de $t_1$ à $t_N$. Elles sont effectuées ici après avoir obtenues l'évolution temporelle $\Phi_{m,d}(t)$ et $\Phi_{r,d}(t)$ des différences de phase dépliée $\Phi_{m,d}$ et $\Phi_{r,d}$, mais peuvent en variante être effectuées en temps réel (les phases 110, 120, 130, 340 étant alors effectuées à la suite à chaque instant de mesure).

Lors d'une étape 341, l'unité de traitement détermine la valeur d'un rapport de phase effectif $R\Phi_{eff}$ défini comme le rapport des différences de phase dépliée $\Phi_{m,d}(t_i)/\Phi_{r,d}(t_i)$. On compare ensuite ce rapport de phase effectif $R\Phi_{eff}$ au rapport des sensibilités $RS_{ref}$, et si l'écart est supérieur en valeur absolue à une valeur seuil prédéfinie S4, on considère que la valeur de la différence de phase dépliée $\Phi_{m,d}(t_i)$ est erronée et on procède à une correction (étapes 342 et 343). Dans le cas contraire, on va directement à l'étape 344.

Lors de l'étape 342, l'unité de traitement détermine un ensemble de valeurs du rapport de phase effectif $R\Phi_{eff}^{(k)}(t_i)$ pour plusieurs valeurs de k allant de $-k_f$ à $+k_f$, où k est un entier et $k_f$ est une valeur finale prédéfinie. Aussi, une boucle est effectuée qui réitère l'étape 342 de manière à balayer les valeurs de k.

Lors d'une étape 342, l'unité de traitement détermine l'incrément $m_m^{(k)}(t_i)$ tel que : $m_m^{(k)}(t_i) = m_m(t_{i-1}) + k$ .

Puis on détermine la différence de phase dépliée $\Phi_m^{(k)}(t_i)$ à partir de la valeur de $m_m^{(k)}(t_i)$ telle que : $\Phi_m^{(k)}(t_i) = \varphi_m(t_i) + m_m^{(k)}(t_i) \times 2\pi$ . Enfin, on détermine le rapport de phase effectif $R\Phi_{eff}^{(k)}(t_i)$ tel que : $R\Phi_{eff}^{(k)}(t_i) = \Phi_m^{(k)}(t_i) / \Phi_{r,d}(t_i)$ . Au terme de l'étape 342, on obtient un ensemble de valeurs $(R\Phi_{eff}^{(k)}(t_i))_{-kf \leq k \leq kf}$ du rapport de phase effectif $R\Phi_{eff}^{(k)}(t_i)$ .

Lors d'une étape 343, l'unité de traitement détermine la valeur optimale $k_{opt}$ qui minimise l'écart en valeur absolue entre chacune des valeurs du rapport de phase effectif $R\Phi_{eff}^{(k)}(t_i)$ avec le rapport des sensibilités $RS_{ref}$, autrement dit : $k_{opt} / \min\limits_{-k_f \leq k \leq k_f} |R\Phi_{eff}^{(k)}(t_i) - RS_{ref}|$ . La valeur optimale $k_{opt}$ est donc l'entier, positif ou négatif, qui correspond au nombre de discontinuités qui n'ont pas été détectées par le procédé entre deux instants de mesure successifs. On peut alors calculer l'incrément corrigé $m_m(t_i) = m_m(t_{i-1}) + k_{opt}$.

Enfin, lors d'une étape 344, l'unité de traitement détermine la différence de phase corrigée $\Phi_{m,dc}(t_i)$ en ajoutant le multiple entier de $2\pi$, soit $m_m(t_i) \times 2\pi$ à la différence de phase extraite $\varphi_m(t_i)$, telle que : $\Phi_{m,dc}(t_i) = \varphi_m(t_i) + m_m(t_i) \times 2\pi$. L'incrément $m_m(ti)$ est soit celui déterminé lors de l'étape 132 lorsqu'il n'y a pas de valeurs erronées, soit celui déterminé lors de l'étape 343 lorsqu'une valeur erronée a été détectée.

Ainsi, au terme de la phase 340 de correction, on obtient l'évolution temporelle $\Phi_{m,dc}(t)$ de la différence de phase corrigée $\Phi_{m,dc}$, qui est bien représentative de la différence de phase effective, dans la mesure où les valeurs erronées ont été corrigées, en particulier celles liées à une forte variation de la grandeur d'intérêt entre deux instants de mesure successifs induisant plusieurs discontinuités non détectées (la phase de dépliement 130 ne peut détecter qu'une seule discontinuité). Enfin, lors d'une phase suivante, le procédé de détection détermine l'évolution temporelle G(t) de la grandeur d'intérêt G à partir de celle de la différence de phase corrigée $\Phi_{m,dc}$.

Aussi, le procédé de détection selon cette variante du deuxième mode de réalisation permet de déterminer la différence de phase dépliée $\Phi_{m,d}(t)$ qui a été corrigée de ses valeurs erronées, en tirant toujours parti des informations issues des capteurs optiques de référence de moindre sensibilité. La robustesse de détection est donc améliorée.

Des modes de réalisation particuliers viennent d'être décrits. Différentes variantes et modifications apparaîtront à l'homme du métier.

## Revendications

**1.** Système interférométrique de détection (1) d'une grandeur d'intérêt (G) à différents instants de mesure successifs, comportant :

 o au moins un capteur optique de mesure (10m), couplé à une source lumineuse (2) et à au moins un photodétecteur de mesure (3m), comportant deux guides d'onde dont l'un forme un bras (11m) sensible à la grandeur d'intérêt avec une sensibilité $S_m$ prédéfinie et l'autre un bras de référence (12m) non sensible à la grandeur d'intérêt, de sorte que les signaux optiques circulant dans les deux guides d'onde présentent une première différence de phase effective ($\Phi_{m,eff}$) ;
o une unité de traitement (4), connectée au photodétecteur de mesure (3m), adaptée à :

• déterminer un premier paramètre dit de phase extraite ($\varphi_m$) représentatif de la première différence de phase effective ($\Phi_{m,eff}$), à partir d'un signal optique détecté par le photodétecteur de mesure, présentant des valeurs comprises à chaque instant de mesure dans un intervalle de largeur prédéfinie ;
• déterminer un premier paramètre dit de phase dépliée ($\Phi_{m,d}$) par dépliement du premier paramètre de phase extraite ($\varphi_m$) en lui ajoutant un multiple entier positif ou négatif de la largeur d'intervalle, pour ensuite déterminer la grandeur d'intérêt (G) ;

◦ le système interférométrique (1) comportant :
◦ au moins un capteur optique de référence (10r), couplé à une source lumineuse (2) et à au moins un photodétecteur de référence (3r), comportant deux guides d'onde dont l'un forme un bras (11r) sensible à la grandeur d'intérêt avec une sensibilité $S_r$ prédéfinie inférieure à $S_m$ et l'autre un bras de référence (12r) non sensible à la grandeur d'intérêt, de sorte que les signaux optiques circulant dans les deux guides d'onde présentent une deuxième différence de phase effective ($\Phi_{r,eff}$) ;
◦ l'unité de traitement (4) étant connectée au photodétecteur de référence (3r), et adaptée à :

• déterminer un deuxième paramètre dit de phase extraite ($\varphi_r$) représentatif de la deuxième différence de phase effective ($\Phi_{r,eff}$), à partir d'un signal optique détecté par le photodétecteur de référence, présentant des valeurs comprises à chaque instant de mesure dans ledit intervalle ; **caractérisé en ce que** l'unité de traitement (4) est adaptée à
• déterminer un deuxième paramètre dit de phase dépliée ($\Phi_{r,d}$) par dépliement du deuxième paramètre de phase extraite ($\varphi_r$) en lui ajoutant un multiple entier positif ou négatif de ladite largeur d'intervalle ;
• détecter et corriger une valeur erronée du premier paramètre de phase dépliée ($\Phi_{m,d}$) à partir du deuxième paramètre de phase dépliée ($\Phi_{r,d}$), de manière à obtenir un premier paramètre de phase corrigé ($\Phi_{m,dc}$) à partir duquel la grandeur d'intérêt (G) est déterminée.

2. Système interférométrique de détection (1) selon la revendication 1, dans lequel le capteur optique de référence (10r) est dimensionné de sorte que sa sensibilité $S_r$ est au moins 2, 5, 10, 100 ou 1000 fois inférieure à la sensibilité $S_m$ du capteur optique de mesure (10m).

3. Système interférométrique de détection (1) selon la revendication 1 ou 2, dans lequel les capteurs optiques de mesure (10m) et de référence (10r) sont des interféromètres de Mach-Zehnder ou des interféromètres à anneau résonant.

4. Système interférométrique de détection (1) selon l'une quelconque des revendications 1 à 3, dans lequel le bras sensible (11r) du capteur optique de référence (10r) présente une longueur, une largeur, une hauteur et/ou un indice de réfraction différents de celles du bras sensible (11m) du capteur optique de mesure (10m).

5. Système interférométrique de détection (1) selon l'une quelconque des revendications 1 à 4, dans lequel chaque bras sensible (11m, 11r) des capteurs optiques de mesure (10m) et de référence (10r) est revêtu d'une surface sensible (13) comportant des récepteurs avec lesquels des analytes formant la grandeur d'intérêt sont adaptés à interagir par adsorption/désorption.

6. Système interférométrique de détection (1) selon l'une quelconque des revendications 1 à 6, comportant une matrice de capteurs optiques de mesure (10m) et une matrice de capteurs optiques de référence (10r), les capteurs optiques de référence (10r) présentant différentes sensibilités $S_r$ toutes inférieures aux sensibilités $S_m$ des capteurs optiques de mesure (10m).

7. Système interférométrique de détection (1) selon la revendication 6, dans lequel chaque capteur optique de mesure (10m) est adjacent à au moins un capteur optique de référence (10r).

8. Système interférométrique de détection (1) selon les revendications 5 et 6, dans lequel chaque capteur optique de mesure (10m) est adjacent d'au moins un capteur optique de référence (10r) de telle sorte que les surfaces sensibles (13) des capteurs optiques de mesure et de référence adjacents sont au contact l'une de l'autre et forment une même surface sensible.

9. Procédé de détection d'une grandeur d'intérêt (G) à différents instants de mesure successifs, au moyen d'un système interférométrique de détection (1) selon l'une quelconque des revendications précédentes, comportant les phases suivantes :

- détecter (110) le signal optique du capteur optique de mesure par le photodétecteur de mesure, et le signal optique du capteur optique de référence par le photodétecteur de référence ;
- déterminer (120) les premier et deuxième paramètres de phase extraite ($\varphi_m(t_i)$ ; $\varphi_r(t_i)$) ;
- déterminer (130) les premier et deuxième paramètres de phase dépliée ($\Phi_{m,d}(t_i)$ ; $\Phi_{r,d}(t_i)$) ;
- détecter et corriger (140 ; 240 ; 340) une valeur erronée du premier paramètre de phase dépliée ($\Phi_{m,d}(t_i)$) à partir du deuxième paramètre de phase dépliée ($\Phi_{r,d}(t_i)$), de manière à obtenir un premier paramètre de phase corrigé ($\Phi_{m,dc}(t_i)$) ;
- déterminer la grandeur d'intérêt ($G(t_i)$) à partir du premier paramètre de phase corrigé ($\Phi_{m,dc}(t_i)$).

10. Procédé de détection (1) selon la revendication 9, dans lequel la phase de détection et de correction (140) de la valeur erronée comporte les étapes suivantes, effectuées pour chaque instant de mesure :

- détermination d'une première variation instantanée ($\delta\Phi_{m,d}(t_i)$) du premier paramètre de phase dépliée ($\Phi_{m,d}$), et d'une deuxième variation instantanée ($\delta\Phi_{r,d}(t_i)$) du deuxième paramètre de phase dépliée ($\Phi_{r,d}$), entre deux instants de mesure successifs ;
- détection de la valeur erronée lorsque le signe de la première variation instantanée ($\delta\Phi_{m,d}(t_i)$) est différent du signe de la deuxième variation instantanée ($\delta\Phi_{r,d}(t_i)$).

11. Procédé de détection (1) selon la revendication 10, dans lequel la phase de détection et de correction (140) de la valeur erronée comporte en outre les étapes suivantes, effectuées après l'étape de détection :

- détermination d'une valeur d'un incrément ($m_m(t_i)$) à l'instant de mesure à partir de sa valeur ($m_m(t_{i-1})$) à l'instant de mesure précédent auquel est ajouté une unité dont le signe est celui de la deuxième variation instantanée ($\delta\Phi_{r,d}(t_i)$) ;
- détermination du premier paramètre de phase corrigé ($\Phi_{m,dc}(t_i)$) corrigeant la valeur erronée à partir du premier paramètre de phase extraite ($\varphi_m(t_i)$) auquel est ajouté le produit de l'incrément déterminé ($m_m(t_i)$) par la largeur d'intervalle.

12. Procédé de détection (1) selon la revendication 9, comportant une étape de définition d'un rapport des sensibilités ($RS_{ref}$) comme étant égal à un rapport entre la sensibilité $S_m$ du capteur optique de mesure (10m) et la sensibilité $S_r$ du capteur optique de référence (10r), et dans lequel la phase de détection et de correction (240) de la valeur erronée comporte les étapes suivantes effectuées pour chaque instant de mesure :

- détermination d'une valeur attendue ($\Phi_{m,da}(t_i)$) du premier paramètre de phase dépliée ($\Phi_{m,d}$) à partir du rapport des sensibilités ($RS_{ref}$) et du deuxième paramètre de phase dépliée ($\Phi_{m,d}$) ;
- détection de la valeur erronée lorsque la valeur attendue ($\Phi_{m,da}(t_i)$) diffère d'une valeur ($\Phi_{m,d}(t_i)$) du premier paramètre de phase dépliée ($\Phi_{m,d}$) à l'instant de mesure considéré.

13. Procédé de détection (1) selon la revendication 12, dans lequel la phase de détection et de correction (240) de la valeur erronée comporte en outre les étapes suivantes, effectuées après l'étape de détection :

- détermination d'une valeur d'un incrément ($m_m(t_i)$) à l'instant de mesure à partir de sa valeur ($m_m(t_{i-1})$) à l'instant de mesure précédent auquel est ajouté une partie entière arrondie ($\text{round}((\Phi_{m,da}(t_i) - \Phi_{m,d}(t_i))/2\pi$ du rapport ($(\Phi_{m,da}(t_i) - \Phi_{m,d}(t_i))2\pi$) d'un écart ($\Phi_{m,da}(t_i) - \Phi_{m,d}(t_i)$) entre la valeur attendue ($\Phi_{m,da}(t_i)$) et d'une valeur ($\Phi_{m,d}(t_i)$) du premier paramètre de phase dépliée ($\Phi_{m,d}$) à l'instant de mesure considéré sur la largeur d'intervalle ;
- détermination du premier paramètre de phase corrigé ($\Phi_{m,dc}(t_i)$) corrigeant la valeur erronée à partir du premier paramètre de phase extraite ($\varphi_m(t_i)$) auquel est ajouté le produit de l'incrément déterminé ($m_m(t_i)$) par la largeur d'intervalle.

14. Procédé de détection (1) selon la revendication 9, comportant une étape de définition d'un rapport des sensibilités ($RS_{ref}$) comme étant égal à un rapport entre la sensibilité $S_m$ du capteur optique de mesure (10m) et la sensibilité $S_r$ du capteur optique de référence (10r), et dans lequel la phase de détection et de correction (340) de la valeur erronée comporte les étapes suivantes, effectuées pour chaque instant de mesure :

- détermination d'un rapport de phase ($R\Phi_{eff}(t_i)$) comme étant égal à un rapport entre le premier paramètre de

phase dépliée ($\Phi_{m,d}(t_i)$) et le deuxième paramètre de phase dépliée ($\Phi_{r,d}(t_i)$) ;
◦ détection de la valeur erronée lorsque le rapport de phase ($R\Phi_{eff}(t_i)$) diffère du rapport des sensibilités ($RS_{ref}$).

15. Procédé de détection (1) selon la revendication 14, dans lequel la phase de détection et de correction (340) de la valeur erronée comporte en outre les étapes suivantes, effectuées après l'étape de détection :

◦ détermination d'un ensemble de valeurs du premier paramètre de phase dépliée ($\Phi_{m,d}(t_i)$) à partir du premier paramètre de phase extraite ($\varphi_m(t_i)$) et de différentes valeurs d'un incrément ($m_m(t_i)$) entier positif ou négatif multiplié à ladite largeur d'intervalle ;
◦ détermination d'un ensemble de valeurs du rapport de phase ($R\Phi_{eff}(t_i)$) à partir de l'ensemble de valeurs du premier paramètre de phase dépliée ($\Phi_{m,d}(t_i)$) ;
◦ détermination d'une valeur optimale parmi les valeurs de l'incrément ($m_m(t_i)$) minimisant un écart entre les valeurs dudit ensemble du rapport de phase ($R\Phi_{eff}(t_i)$) vis-à-vis du rapport des sensibilités ($RS_{eff}$) ;
◦ détermination du premier paramètre de phase corrigé ($\Phi_{m,dc}(t_i)$) corrigeant la valeur erronée à partir du premier paramètre de phase extraite ($\varphi_m(t_i)$) auquel est ajouté le produit de la valeur optimale de l'incrément ($m_m(t_i)$) par la largeur d'intervalle.

## Patentansprüche

1. Interferometrisches Erkennungssystem (1) einer interessierenden Größe (G) zu verschiedenen aufeinanderfolgenden Messzeitpunkten, das Folgendes aufweist:

◦ mindestens einen optischen Messsensor (10m), der mit einer Lichtquelle (2) und mindestens einer Messlichtschranke (3m) gekoppelt ist und zwei Wellenleiter aufweist, von denen einer einen für die interessierende Größe empfindlichen Arm (11m) mit einer vordefinierten Empfindlichkeit $S_m$ und der andere einen für die interessierende Größe unempfindlichen Referenzarm (12m) bildet, so dass die in den beiden Wellenleitern zirkulierenden optischen Signale einen ersten effektiven Phasenunterschied ($\Phi_{m,eff}$) enthalten;
◦ eine Verarbeitungseinheit (4), die mit der Messlichtschranke (3m) verbunden und für Folgendes geeignet ist:

• Bestimmen eines ersten extrahierten Phasenparameters ($\phi_m$), der für die erste effektive Phasendifferenz ($\Phi_{m,eff}$) repräsentativ ist, ausgehend von einem optischen Signal, das von der Messlichtschranke erkannt wird und Werte enthält, die zu jedem Messzeitpunkt in einem vordefinierten Breitenintervall liegen;
• Bestimmen eines ersten entfalteten Phasenparameters ($\Phi_{m,d}$) durch Entfalten des ersten extrahierten Phasenparameters ($\phi_m$) durch Addition eines positiven oder negativen Ganzzahlmultiplikators der Intervallbreite, um anschließend die interessierende Größe (G) zu bestimmen;

◦ wobei das interferometrische System (1) Folgendes aufweist:

◦ mindestens einen optischen Referenzsensor (10r), der mit einer Lichtquelle (2) und mindestens einer Referenzlichtschranke (3r) gekoppelt ist und zwei Wellenleiter aufweist, von denen einer einen für die interessierende Größe empfindlichen Arm (11r) mit einer vordefinierten Empfindlichkeit $S_r$ kleiner als $S_m$ und der andere einen für die interessierende Größe nicht empfindlichen Referenzarm (12r) bildet, so dass die in den beiden Wellenleitern zirkulierenden optischen Signale eine zweite effektive Phasendifferenz ($\Phi_{r,eff}$) enthalten;
◦ wobei die Verarbeitungseinheit (4) mit der Referenzlichtschranke (3r) verbunden und für Folgendes geeignet ist:

• Bestimmen eines zweiten extrahierten Phasenparameters ($\phi_r$), der für die zweite effektive Phasendifferenz ($\Phi_{r,eff}$) repräsentativ ist, ausgehend von einem optischen Signal, das von der Referenzlichtschranke erkannt wird und Werte enthält, die zu jedem Messzeitpunkt innerhalb des Intervalls liegen; **dadurch gekennzeichnet, dass** die Verarbeitungseinheit (4) für Folgendes geeignet ist:
• Bestimmen eines zweiten entfalteten Phasenparameters ($\Phi_{r,d}$) durch Entfalten des zweiten extrahierten Phasenparameters ($\phi_r$) durch Addition eines positiven oder negativen Ganzzahlmultiplikators der Intervallbreite;
• Erkennen und Korrigieren eines fehlerhaften Wertes des ersten entfalteten Phasenparameters ($\Phi_{m,d}$) ausgehend von dem zweiten entfalteten Phasenparameter ($\Phi_{r,d}$), so dass ein erster korrigierter Phasenparameter ($\Phi_{m,dc}$) erhalten wird, aus dem die interessierende Größe (G) bestimmt wird.

2. Interferometrisches Erkennungssystem (1) nach Anspruch 1, wobei der optische Referenzsensor (10r) so bemessen ist, dass seine Empfindlichkeit $S_r$ mindestens das 2, 5, 10, 100 oder 1000-Fache der Empfindlichkeit $S_m$ des optischen Messsensors (10m) unterschreitet.

3. Interferometrisches Erkennungssystem (1) nach Anspruch 1 oder 2, wobei die optischen Mess- (10m) und Referenzsensoren (10r) Mach-Zehnder-Interferometer oder Resonanzringinterferometer sind.

4. Interferometrisches Erkennungssystem (1) nach einem der Ansprüche 1 bis 3, wobei der empfindliche Arm (11r) des optischen Referenzsensors (10r) eine andere Länge, Breite, Höhe und/oder einen anderen Brechungsindex enthält als der empfindliche Arm (11m) des optischen Messsensors (10m).

5. Interferometrisches Erkennungssystem (1) nach einem der Ansprüche 1 bis 4, wobei jeder empfindliche Arm (11m, 11r) der optischen Mess- (10m) und Referenzsensoren (10r) mit einer empfindlichen Oberfläche (13) beschichtet ist, die Rezeptoren aufweist, mit denen Analyten, die die interessierende Größe bilden, für die Interaktion durch Adsorption/Desorption geeignet sind.

6. Interferometrisches Erkennungssystem (1) nach einem der Ansprüche 1 bis 6, das eine Matrix aus optischen Messsensoren (10m) und eine Matrix aus optischen Referenzsensoren (10r) aufweist, wobei die optischen Referenzsensoren (10r) unterschiedliche Empfindlichkeiten $S_r$ enthalten, die alle die Empfindlichkeiten $S_m$ der optischen Messsensoren (10m) unterschreiten.

7. Interferometrisches Erkennungssystem (1) nach Anspruch 6, wobei jeder optische Messsensor (10m) an mindestens einen optischen Referenzsensor (10r) angrenzt.

8. Interferometrisches Erkennungssystem (1) nach Anspruch 5 und 6, wobei jeder optische Messsensor (10m) an mindestens einen optischen Referenzsensor (10r) angrenzt, so dass die empfindlichen Oberflächen (13) der benachbarten optischen Mess- und Referenzsensoren einander berühren und dieselbe empfindliche Oberfläche bilden.

9. Verfahren zum Erkennen einer interessierenden Größe (G) zu verschiedenen aufeinanderfolgenden Messzeitpunkten mittels eines interferometrischen Erkennungssystems (1) nach einem der vorhergehenden Ansprüche, das die folgenden Phasen aufweist:

   ∘ Erkennen (110) des optischen Signals des optischen Messsensors durch die Messlichtschranke und des optischen Signals des optischen Referenzsensors durch die Referenzlichtschranke;
   ∘ Bestimmen (120) der ersten und zweiten extrahierten Phasenparameter ($\phi_m(t_i)$; $\phi_r(t_i)$);
   ∘ Bestimmen (130) des ersten und zweiten entfalteten Phasenparameters ($\Phi_{m,d}(t_i)$; $\Phi_{r,d}(t_i)$).
   ∘ Erkennen und Korrigieren (140; 240; 340) eines fehlerhaften Wertes des ersten entfalteten Phasenparameters ($\Phi_{m,d}(t_i)$) ausgehend von dem zweiten entfalteten Phasenparameter ($\Phi_{r,d}(t_i)$), so dass ein korrigierter erster Phasenparameter ($\Phi_{m,dc}(t_i)$) erhalten wird;
   ∘ Bestimmen der interessierenden Größe ($G(t_i)$) ausgehend von dem ersten korrigierten Phasenparameter ($\Phi_{m,dc}(t_i)$).

10. Erkennungsverfahren (1) nach Anspruch 9, wobei die Erkennungs- und Korrekturphase (140) des fehlerhaften Werts die folgenden Schritte aufweist, die für jeden Messzeitpunkt durchgeführt werden:

   ∘ Bestimmung einer ersten momentanen Änderung ($\delta\Phi_{m,d}(t_i)$) des ersten entfalteten Phasenparameters ($\Phi_{m,d}$) und einer zweiten momentanen Änderung ($\delta\Phi_{r,d}(t_i)$) des zweiten entfalteten Phasenparameters ($\Phi_{r,d}$) zwischen zwei aufeinanderfolgenden Messzeitpunkten;
   ∘ Erkennung des falschen Wertes, wenn das Vorzeichen der ersten momentanen Änderung ($\delta\Phi_{m,d}(t_i)$) von dem Vorzeichen der zweiten momentanen Änderung ($\delta\Phi_{r,d}(t_i)$) abweicht.

11. Erkennungsverfahren (1) nach Anspruch 10, wobei die Erkennungs- und Korrekturphase (140) des fehlerhaften Werts ferner die folgenden Schritte aufweist, die nach dem Erkennungsschritt durchgeführt werden:

   ∘ Bestimmung eines Wertes eines Inkrements ($m_m(t_i)$) zu dem Messzeitpunkt ausgehend von seinem Wert ($m_m(t_{i-1})$) zu dem vorherigen Messzeitpunkt, dem eine Einheit hinzugefügt wird, deren Vorzeichen das der zweiten momentanen Änderung ($\delta\Phi_{r,d}(t_i)$) ist;

◦ Bestimmung des ersten korrigierten Phasenparameters ($\Phi_{m,dc}(t_i)$) zur Korrektur des fehlerhaften Werts aus dem ersten extrahierten Phasenparameter ($\phi_m(t_i)$), zu dem das Produkt des ermittelten Inkrements ($m_m(t_i)$) durch die Intervallbreite addiert wird.

12. Erkennungsverfahren (1) nach Anspruch 9, das einen Schritt der Definition eines Verhältnisses der Empfindlichkeiten ($RS_{ref}$) als gleich einem Verhältnis zwischen der Empfindlichkeit $S_m$ des optischen Messsensors (10m) und der Empfindlichkeit $S_r$ des optischen Referenzsensors (10r) aufweist, und wobei die Erkennungs- und Korrekturphase (240) des fehlerhaften Werts die folgenden Schritte aufweist, die für jeden Messzeitpunkt durchgeführt werden:

◦ Bestimmung eines erwarteten Wertes ($\Phi_{m,da}(t_i)$) des ersten entfalteten Phasenparameters ($\Phi_{m,d}$) aus dem Verhältnis der Empfindlichkeiten ($RS_{ref}$) und des zweiten entfalteten Phasenparameters ($\Phi_{m,d}$);
◦ Erkennung des falschen Werts, wenn der erwartete Wert ($\Phi_{m,da}(t_i)$) zu dem betrachteten Messzeitpunkt um einen Wert ($\Phi_{m,d}(t_i)$) von dem ersten entfalteten Phasenparameter ($\Phi_{m,d}$) abweicht.

13. Erkennungsverfahren (1) nach Anspruch 12, wobei die Erkennungs- und Korrekturphase (240) des fehlerhaften Werts ferner die folgenden Schritte aufweist, die nach dem Erkennungsschritt durchgeführt werden:

◦ Bestimmung eines Wertes eines Inkrements ($m_m(t_i)$) zu dem Messzeitpunkt ausgehend von seinem Wert ($m_m(t_{i-1})$) zu dem vorherigen Messzeitpunkt, dem ein gerundeter ganzer Teil (round($(\Phi_{m,da}(t_i) - \Phi_{m,d}(t_i))/2\pi$)) des Verhältnisses (($\Phi_{m,da}(t_i)-\phi_{m,d}(t_i))/2\pi$) einer Abweichung ($\Phi_{m,da}(t_i)-\Phi_{m,d}(t_i)$) zwischen dem erwarteten Wert ($\Phi_{m,da}(t_i)$) und einem Wert ($\Phi_{m,d}(t_i)$) des ersten entfalteten Phasenparameters ($\Phi_{m,d}$) zu dem betrachteten Messzeitpunkt über die Intervallbreite hinzuaddiert wird;
◦ Bestimmung des ersten korrigierten Phasenparameters ($\Phi_{m,dc}(t_i)$) zur Korrektur des fehlerhaften Werts aus dem ersten extrahierten Phasenparameter ($\phi_m(t_i)$), zu dem das Produkt des ermittelten Inkrements ($m_m(t_i)$) durch die Intervallbreite addiert wird.

14. Erkennungsverfahren (1) nach Anspruch 9, das einen Schritt zur Definition eines Verhältnisses der Empfindlichkeiten ($RS_{ref}$) als gleich einem Verhältnis zwischen der Empfindlichkeit $S_m$ des optischen Messsensors (10m) und der Empfindlichkeit $S_r$ des optischen Referenzsensors (10r) aufweist, und wobei die Erkennungs- und Korrekturphase (340) des fehlerhaften Werts die folgenden Schritte aufweist, die für jeden Messzeitpunkt durchgeführt werden:

◦ Bestimmung eines Phasenverhältnisses ($R\Phi_{eff}(t_i)$) als gleich einem Verhältnis zwischen dem ersten entfalteten Phasenparameter ($\Phi_{m,d}(t_i)$) und dem zweiten entfalteten Phasenparameter ($\Phi_{r,d}(t_i)$);
◦ Erkennung des falschen Wertes, wenn das Phasenverhältnis ($R\Phi_{eff}(t_i)$) von dem Empfindlichkeitsverhältnis ($RS_{ref}$) abweicht.

15. Erkennungsverfahren (1) nach Anspruch 14, wobei die Erkennungs- und Korrekturphase (340) des fehlerhaften Werts ferner die folgenden Schritte aufweist, die nach dem Erkennungsschritt durchgeführt werden:

◦ Bestimmung eines Wertesatzes des ersten entfalteten Phasenparameters ($\Phi_{m,d}(t_i)$) aus dem ersten extrahierten Phasenparameter ($\phi_m(t_i)$) und verschiedener Werte eines positiven oder negativen ganzen Inkrements ($m_m(t_i)$) multipliziert mit der Intervallbreite;
◦ Bestimmung eines Wertesatzes des Phasenverhältnisses ($R\Phi_{eff}(t_i)$) aus dem Wertesatz des ersten entfalteten Phasenparameters ($\Phi_{m,d}(t_i)$);
◦ Bestimmung eines optimalen Werts unter den Werten des Inkrements ($m_m(t_i)$) zur Minimierung einer Abweichung zwischen den Werten der Gesamtheit des Phasenverhältnisses ($R\Phi_{eff}(t_i)$) in Bezug auf das Verhältnis der Empfindlichkeiten ($RS_{eff}$);
◦ Bestimmung des ersten korrigierten Phasenparameters ($\Phi_{m,dc}(t_i)$) zur Korrektur des fehlerhaften Werts aus dem ersten extrahierten Phasenparameter ($\phi_m(t_i)$), zu dem das Produkt des optimalen Werts des Inkrements ($m_m(t_i)$) durch die Intervallbreite addiert wird.

**Claims**

1. Interferometric system (1) for detecting a quantity of interest (G) at various successive measurement times, comprising:

◦ at least one measurement optical sensor (10m), coupled to a light source (2) and to at least one measurement photodetector (3m), comprising two waveguides one of which forms an arm (11m) sensitive to the quantity of interest with a predefined sensitivity $S_m$ and the other forms a reference arm (12m) not sensitive to the quantity of interest, so that the optical signals circulating in the two waveguides have a first effective phase difference ($\Phi_{m,eff}$);

  ○ a processing unit (4), connected to the measurement photodetector (3m), adapted to:

  • determine a first so-called extracted phase parameter ($\phi_m$) representative of the first effective phase difference ($\Phi_{m,eff}$), from an optical signal detected by the measurement photodetector, having values lying within an interval of predefined width at each measurement time;
  • determine a first so-called unwrapped phase parameter ($\Phi_{m,d}$) by unwrapping the first extracted phase parameter ($\phi_m$) by adding a positive or negative integer that is a multiple of the interval width thereto, to then determine the quantity of interest (G);

  ○ the interferometric system (1) comprising:

  ○ at least one reference optical sensor (10r), coupled to a light source (2) and to at least one reference photodetector (3r), comprising two waveguides one of which forms an arm (11r) sensitive to the quantity of interest with a predefined sensitivity $S_r$ lower than $S_m$ and the other forms a reference arm (12r) not sensitive to the quantity of interest, such that the optical signals circulating in the two waveguides have a second effective phase difference ($\Phi_{r,eff}$);
  ○ the processing unit (4) being connected to the reference photodetector (3r), and adapted to:

  • determine a second so-called extracted-phase parameter ($\phi_r$) representative of the second effective phase difference ($\Phi_{r,eff}$), from an optical signal detected by the reference photodetector, having values lying in said interval at each time of measurement; **characterised in that** the processing unit (4) is adapted to:
  • determine a second so-called unwrapped phase parameter ($\Phi_{r,d}$) by unwrapping the second extracted phase parameter ($\phi_r$) by adding a positive or negative integer that is a multiple of said interval width thereto;
  • detect and correct an erroneous value of the first unwrapped phase parameter ($\Phi_{m,d}$) from the second unwrapped phase parameter ($\Phi_{r,d}$), so as to obtain a first corrected phase parameter ($\Phi_{m,dc}$) from which the quantity of interest (G) is determined.

2. Interferometric detection system (1) according to claim 1, wherein the reference optical sensor (10r) is sized such that its sensitivity $S_r$ is at least 2, 5, 10, 100 or 1000 times lower than the sensitivity $S_m$ of the measurement optical sensor (10m).

3. Interferometric detection system (1) according to claim 1 or 2, wherein the optical measurement (10m) and reference (10r) sensors are Mach-Zehnder interferometers or resonant ring interferometers.

4. Interferometric detection system (1) according to any one of claims 1 to 3, wherein the sensitive arm (11r) of the optical reference sensor (10r) has a length, width, height and/or refractive index different from those of the sensitive arm (11m) of the measurement optical sensor (10m).

5. Interferometric detection system (1) according to any one of claims 1 to 4, wherein each sensitive arm (11m, 11r) of the optical measurement (10m) and reference (10r) sensors is coated with a sensitive surface (13) comprising receptors with which analytes forming the quantity of interest are adapted to interact by adsorption/desorption.

6. Interferometric detection system (1) according to any one of claims 1 to 6, comprising an array of measurement optical sensors (10m) and an array of optical reference sensors (10r), the optical reference sensors (10r) having different sensitivities $S_r$ all lower than the sensitivities $S_m$ of the measurement optical sensors (10m).

7. Interferometric detection system (1) according to claim 6, wherein each measurement optical sensor (10m) is adjacent to at least one optical reference sensor (10r).

8. Interferometric detection system (1) according to claims 5 and 6, wherein each measurement optical sensor (10m) is adjacent to at least one optical reference sensor (10r) such that the sensitive surfaces (13) of the adjacent optical measurement and reference sensors are in contact with each other and form one and the same sensitive surface.

9. Method for detecting a quantity of interest (G) at various successive measurement times, by means of an interferometric detection system (1) according to any one of the preceding claims, comprising the following phases:

- detecting (110) the optical signal of the measurement optical sensor by the measurement photodetector, and the optical signal of the optical reference sensor by the reference photodetector;
- determining (120) the first and second extracted phase parameters ($\phi_m(t_i)$; $\phi_r(t_i)$);
- determining (130) the first and second unwrapped phase parameters ($\Phi_{m,d}(t_i)$; $\Phi_{r,d}(t_i)$);
- detecting and correcting (140; 240; 340) an erroneous value of the first unwrapped phase parameter ($\Phi_{m,d}(t_i)$) from the second unwrapped phase parameter ($\Phi_{r,d}(t_i)$), so as to obtain a corrected first phase parameter ($\Phi_{m,dc}(t_i)$);
- determining the quantity of interest ($G(t_i)$) from the first corrected phase parameter ($\Phi_{m,dc}(t_i)$).

10. Detection method (1) according to claim 9, wherein the phase of detecting and correcting (140) the erroneous value includes the following steps, performed for each measurement time:

- determining a first instantaneous variation ($\delta\Phi_{m,d}(t_i)$) of the first unwrapped phase parameter ($\Phi_{m,d}$), and a second instantaneous variation ($\delta\Phi_{r,d}(t_i)$) of the second unwrapped phase parameter ($\Phi_{r,d}$), between two successive measurement times;
- detecting the erroneous value when the sign of the first instantaneous variation ($\delta\Phi_{m,d}(t_i)$) is different from the sign of the second instantaneous variation ($\delta\Phi_{r,d}(t_i)$).

11. Detection method (1) according to claim 10, wherein the phase (140) of detecting and correcting the erroneous value further comprises the following steps, performed after the detection step:

- determining a value of an increment ($m_m(t_i)$) at the time of measurement from its value ($m_m(t_{i-1})$) at the previous time of measurement to which a unit whose sign is that of the second instantaneous variation ($\delta\Phi_{r,d}(t_i)$) is added;
- determining the first corrected phase parameter ($\Phi_{m,dc}(t_i)$) correcting the erroneous value from the first extracted phase parameter ($\phi_m(t_i)$) to which the product of the determined increment ($m_m(t_i)$) and the interval width is added.

12. Detection method (1) according to claim 9, comprising a step of defining a ratio of the sensitivities ($RS_{ref}$) as being equal to a ratio between the sensitivity $S_m$ of the measurement optical sensor (10m) and the sensitivity $S_r$ of the reference optical sensor (10r), and wherein the phase (240) of detection and correction of the erroneous value comprises the following steps performed for each measurement time:

- determining an expected value ($\Phi_{m,da}(t_i)$) of the first unwrapped phase parameter ($\Phi_{m,d}$) from the ratio of the sensitivities ($RS_{ref}$) and the second unwrapped phase parameter ($\Phi_{m,d}$)
- detecting the erroneous value when the expected value ($\Phi_{m,da}(t_i)$) differs by a value ($\Phi_{m,d}(t_i)$) from the first unwrapped phase parameter ($\Phi_{m,d}$) at the considered time of measurement.

13. Detection method (1) according to claim 12, wherein the phase (240) of detecting and correcting the erroneous value further comprises the following steps, performed after the detection step:

- determining a value of an increment ($m_m(t_i)$) at the time of measurement from its value ($m_m(t_{i-1})$) at the previous time of measurement to which a rounded integer part ($round((\Phi_{m,da}(t_i) - \Phi_{m,d}(t_i))/2\pi)$) of the ratio ($(\Phi_{m,da}(t_i) - \Phi_{m,d}(t_i))/2\pi$) of a deviation ($\Phi_{m,da}(t_i) - \Phi_{m,d}(t_i)$) between the expected value ($\Phi_{m,da}(t_i)$) and a value ($\Phi_{m,d}(t_i)$) of the first unwrapped phase parameter ($\Phi_{m,d}$) is added at the considered time of measurement over the interval width;
- determining the first corrected phase parameter ($\Phi_{m,dc}(t_i)$) correcting the erroneous value from the first extracted phase parameter ($\phi_m(t_i)$) to which the product of the determined increment ($m_m(t_i)$) and the interval width is added.

14. Detection method (1) according to claim 9, comprising a step of defining a ratio of the sensitivities ($RS_{ref}$) as equal to a ratio between the sensitivity $S_m$ of the measurement optical sensor (10m) and the sensitivity $S_r$ of the reference optical sensor (10r), and wherein the phase (340) of detection and correction of the erroneous value comprises the following steps, performed for each measurement time:

- determining a phase ratio ($R\Phi_{eff}(t_i)$) as being equal to a ratio between the first unwrapped phase parameter ($\Phi_{m,d}(t_i)$) and the second unwrapped phase parameter ($\Phi_{r,d}(t_i)$);
- detecting the erroneous value when the phase ratio ($R\Phi_{eff}(t_i)$) differs from the sensitivity ratio ($RS_{ref}$).

15. Detection method (1) according to claim 14, wherein the phase (340) of detecting and correcting the erroneous value further comprises the following steps, performed after the detection step:

   ◦ determining a set of values of the first unfolded phase parameter ($\Phi_{m,d}(t_i)$) from the first extracted phase parameter $\phi_m(t_i)$) and various values of a positive or negative integer ($m_m(t_i)$) multiplied by said interval width;
   ◦ determining a set of values of the phase ratio ($R\Phi_{eff}(t_i)$) from the set of values of the first unwrapped phase parameter ($\Phi_{m,d}(t_i)$);
   ◦ determining an optimal value among the values of the increment ($m_m(t_i)$) minimising a deviation between the values of said set of the phase ratio ($R\Phi_{eff}(t_i)$) with respect to the ratio of the sensitivities ($RS_{eff}$);
   ◦ determining the first corrected phase parameter ($\Phi_{m,dc}(t_i)$) correcting the erroneous value from the first extracted phase parameter ($\phi_m(t_i)$) to which the product of the optimal value of the increment ($m_m(t_i)$) and the interval width is added.

**Fig.1A**

$$10 \quad (I_m(t_i))_{0 \leq i \leq N}$$

$$20 \quad (\varphi_m(t_i))_{0 \leq i \leq N}$$

$$31 \quad \delta\varphi_m(t_i) = \varphi_m(t_i) - \varphi_m(t_{i-1})$$

$$32 \quad \begin{aligned} \delta\varphi_m(t_i) > +S1 & \quad \Rightarrow m(t_i) = m(t_{i-1}) - 1 \\ \delta\varphi_m(t_i) < -S1 & \quad \Rightarrow m(t_i) = m(t_{i-1}) + 1 \\ -S1 \leq \delta\varphi_m(t_i) \leq +S1 & \quad \Rightarrow m(t_i) = m(t_{i-1}) \end{aligned}$$

$$33 \quad \Phi_{m,d}(t_i) = \varphi_m(t_i) + m(t_i) \times 2\pi$$

$$i \rightarrow i+1$$

**Fig.1B**

**Fig.2A**

**Fig.2B**

EP 4 437 328 B1

Fig.3A

Fig.3B

Fig.3C

24

Fig.4A

Fig.4B

Fig.4C

| 110 | $(I_m(t_i))_{0 \leq i \leq N}$ ; $(I_r(t_i))_{0 \leq i \leq N}$ |

| 120 | $(\varphi_m(t_i))_{0 \leq i \leq N}$ ; $(\varphi_r(t_i))_{0 \leq i \leq N}$ |

130

| 131 | $\delta\varphi_m(t_i)$ ; $\delta\varphi_r(t_i)$ |

| 132 | $m_m(t_i)$ ; $m_r(t_i)$ |

| 133 | $(\Phi_{m,d}(t_i))_{0 \leq i \leq N}$ ; $(\Phi_{r,d}(t_i))_{0 \leq i \leq N}$ |

140

| 141 | $\delta\Phi_{m,d}(t_i)$ ; $\delta\Phi_{r,d}(t_i)$ |

142

$\text{sign}(\delta\Phi_{m,d}(t_i)) \neq \text{sign}(\delta\Phi_{r,d}(t_i))$
puis $|\delta\Phi_{m,d}(t_i)| > S2$

| 143 | $m_m(t_i) = m_m(t_{i-1}) + \text{sign}(\delta\Phi_{r,d}(t_i)) \times 1$ |

| 144 | $\Phi_{m,dc}(t_i) = \varphi_m(t_i) + m_m(t_i) \times 2\pi$ |

$i \rightarrow i+1$

**Fig.5**

**Fig.6A**

**Fig.6B**

**Fig.6C**

1    $RS_{ref}$

110    $(I_m(t_i))_{0 \le i \le N}$ ; $(I_r(t_i))_{0 \le i \le N}$

120    $(\varphi_m(t_i))_{0 \le i \le N}$ ; $(\varphi_r(t_i))_{0 \le i \le N}$

130

131    $\delta\varphi_m(t_i)$ ; $\delta\varphi_r(t_i)$

132    $m_m(t_i)$ ; $m_r(t_i)$

133    $(\Phi_{m,d}(t_i))_{0 \le i \le N}$ ; $(\Phi_{r,d}(t_i))_{0 \le i \le N}$

240

241    $\Phi_{m,da}(t_i) = RS_{ref} \times \Phi_{r,d}(t_i)$
$|\Phi_{m,da}(t_i) - \Phi_{m,d}(t_i)| > S3$

242    $\delta\Phi_{r,d}(t_i)$

243    $m_m(t_i) = m_m(t_{i-1}) + sign(\delta\Phi_{r,d}(t_i)) \times$
$round((\Phi_{m,da}(t_i) - \Phi_{m,d}(t_i))/2\pi)$

244    $\Phi_{m,dc}(t_i) = \varphi_m(t_i) + m_m(t_i) \times 2\pi$

$i \rightarrow i+1$

**Fig.7**

**Fig.8**

**EP 4 437 328 B1**